# EUROPEAN PATENT APPLICATION

(11) **EP 4 790 404 A1**
(43) Date of publication of application: **12.08.2026**
(21) Application number: 24874647.1
(22) Date of filing: 02.10.2024
(51) Int. Cl.: G01N 30/26, G01N 30/02, G01N 30/72, G01N 30/88

(54) **ANALYSIS METHOD**

(30) Priority: 03.10.2023 JP 2023172327
(71) Applicant: Daicel Corporation, Osaka-shi, Osaka 530-0011 (JP); National University Corporation Kobe University, Kobe-shi, Hyogo 657-8501 (JP)
(72) Inventor: NAGAI, Kanji, Tokyo 108-8230 (JP); MURATA, Kengo, Tokyo 108-8230 (JP); KATO, Satoshi, Myoko-shi, Niigata 944-8550 (JP); HASUNUMA, Tomohisa, Kobe-shi, Hyogo 657-8501 (JP); YOSHIDA, Takanobu, Kobe-shi, Hyogo 657-8501 (JP)
(74) Representative: Grünecker Patent- und Rechtsanwälte PartG mbB
(86) International application number: PCT/JP2024/035310
(87) International publication number: WO 2025/075046

(57) **Abstract**

An analysis method including a separation step of separating an analyte contained in a sample by chromatography, and a detection step of detecting the analyte separated in the separation step. A mobile phase used in the chromatography contains: one or more oxalic acid compounds selected from the group consisting of oxalic acid, (COONR₄)₂, and HOOCCOONR₄; and one or more monovalent carboxylic acid compounds selected from the group consisting of formic acid, acetic acid, propionic acid, HCOONR₄, CH₃COONR₄, and CH₃CH₂COONR₄ (where R is a hydrogen atom or an alkyl group).

## Description

### TECHNICAL FIELD

The present disclosure relates to an analysis method, and more specifically relates to an analysis method using chromatography.

### BACKGROUND ART

Materials having high corrosion resistance and chemical resistance are used in devices for carrying out analyses using chromatography. For example, metal materials such as stainless steel are generally used in pipes and filters of liquid chromatographs and in flow cells in detectors.

However, in fields such as biochemistry and pharmacy, many samples to be analyzed by chromatography are easily adsorbed to metals such as stainless steel. Moreover, it is known that when such a sample is adsorbed on a metal, problems such as an increase in noise and a decrease in detection sensitivity occur. Therefore, in analysis by chromatography, a demand exists for the development of a method for analyzing a sample containing a substance particularly susceptible to adsorption on a metal with less noise and high detection sensitivity.

Patent Document 1 indicates that by performing liquid chromatography using a mobile phase to which oxalic acid has been added, adsorption of cytidine triphosphate (CTP), cytidine diphosphate (CDP), and guanosine diphosphate (GDP) to a metal in, for example, a pipe is prevented, and thus noise can be reduced and detection intensity can be improved.

### CITATION LIST

### PATENT DOCUMENT

Patent Document 1: WO 2020/090887

### SUMMARY OF INVENTION

### TECHNICAL PROBLEM

In chromatography, when peak shape symmetry is poor, problems such as a reduction in separation performance and analysis accuracy, a reduced limit of quantification, and a decrease in reliability of peak integration may occur, and thus a demand exists for the development of technology for improving the peak shape symmetry. In the analysis method described in Patent Document 1, peak tailing can be suppressed to some extent by using the mobile phase containing oxalic acid, but further improvement in the peak shape symmetry is desired.

Thus, an object of the present disclosure is to provide an analysis method capable of yielding a chromatogram having excellent peak shape symmetry for an analyte.

### SOLUTION TO PROBLEM

To solve the issues described above, the inventors of the present invention conducted intensive studies. As a result, the present inventors discovered that a chromatogram having excellent peak shape symmetry for an analyte can be obtained by performing chromatography using a mobile phase containing oxalic acid or a salt thereof and a monovalent carboxylic acid or a salt thereof. That is, an overview of the present disclosure is as described below.
[1] An analysis method for analyzing a sample, the analysis method including:
   a separation step of separating an analyte contained in the sample by chromatography; and
   a detection step of detecting the analyte separated in the separation step; wherein
   a mobile phase used in the chromatography contains one or more oxalic acid compounds selected from the group consisting of oxalic acid, an oxalate represented by the following General Formula (1), and an oxalate represented by the following General Formula (2), and one or more monovalent carboxylic acid compounds selected from the group consisting of formic acid, acetic acid, propionic acid, a formate represented by the following General Formula (3), an acetate represented by the following General Formula (4), and a propionate represented by the following General Formula (5), and
   when the oxalic acid compound contains only oxalic acid, the monovalent carboxylic acid compound contains one or more selected from the group consisting of the formate, the acetate, and the propionate, and when the monovalent carboxylic acid compound contains only one or more selected from the group consisting of formic acid, acetic acid, and propionic acid, the oxalic acid compound contains the oxalate.

      (COONR₄)₂ (1)

      HOOCCOONR₄ (2)

      HCOONR₄ (3)

      CH₃COONR₄ (4)

      CH₃CH₂COONR₄ (5)
   (where, each R independently represents a hydrogen atom or an alkyl group having from 1 to 20 carbons.)
[2] The analysis method according to [1], wherein the sample contains a compound having a phosphate group, a mixture of enantiomers, or a polyvalent carboxylic acid compound.
[3] The analysis method according to [2], wherein the compound having a phosphate group is one or more selected from the group consisting of a nucleic acid, a nucleic acid derivative, a nucleotide, and a nucleotide derivative.
[4] The analysis method according to any of [1] to [3], wherein the chromatography is liquid chromatography or supercritical fluid chromatography.
[5] The analysis method according to any one of [1] to [4], wherein the detection of the analyte in the detection step is performed by absorbance detection, mass spectrometry, or a combination thereof.
[6] The analysis method according to [5], wherein an ionization method in the mass spectrometry is electrospray ionization or atmospheric pressure chemical ionization.
[7] The analysis method according to any one of [1] to [6], wherein the mobile phase satisfies one or both of the following (a) and (b):
   (a) a concentration of the oxalic acid compound is from 0.01 mM to 1.0 mM; and
   (b) a concentration of the monovalent carboxylic acid compound is from 3.5 mM to 20.0 mM.
[8] A mobile phase composition for use in a mobile phase for chromatography, the mobile phase composition containing:
   one or more oxalic acid compounds selected from the group consisting of oxalic acid, an oxalate represented by the following General Formula (1), and an oxalate represented by the following General Formula (2); and
   one or more monovalent carboxylic acid compounds selected from the group consisting of formic acid, acetic acid, propionic acid, a formate represented by the following General Formula (3), an acetate represented by the following General Formula (4), and a propionate represented by the following General Formula (5), wherein
   when the oxalic acid compound contains only oxalic acid, the monovalent carboxylic acid compound contains one or more selected from the group consisting of the formate, the acetate, and the propionate, and when the monovalent carboxylic acid compound contains only one or more selected from the group consisting of formic acid, acetic acid, and propionic acid, the oxalic acid compound contains the oxalate.

      (COONR₄)₂ (1)

      HOOCCOONR₄ (2)

      HCOONR₄ (3)

      CH₃COONR₄ (4)

      CH₃CH₂COONR₄ (5)
   (where, each R independently represents a hydrogen atom or an alkyl group having from 1 to 20 carbons.)
[9] An analytical kit including the mobile phase composition according to [8].

### ADVANTAGEOUS EFFECTS OF INVENTION

The present disclosure can achieve an effect that an analysis method capable of yielding a chromatogram having excellent peak shape symmetry for an analyte can be obtained.

The problems and effects of the present disclosure are not limited to those specifically described above and also include those obvious to a person skilled in the art based on the entire specification.

### BRIEF DESCRIPTION OF DRAWINGS

[FIG. 1] FIG. 1 is a schematic diagram of a peak for explaining elements related to calculation of the symmetry factor, the number of theoretical plates, and the peak full width at half maximum.
[FIG. 2] FIG. 2 is a schematic view illustrating an example of an analytical kit according to an embodiment of the present disclosure.
[FIG. 3] FIG. 3 is a liquid chromatogram of Example 1.
[FIG. 4] FIG. 4 is a liquid chromatogram of Comparative Example 1.
[FIG. 5] FIG. 5 is a liquid chromatogram of Comparative Example 2.
[FIG. 6] FIG. 6 is a liquid chromatogram of Example 2.
[FIG. 7] FIG. 7 is a liquid chromatogram of Example 3.
[FIG. 8] FIG. 8 is a liquid chromatogram of Example 4.
[FIG. 9] FIG. 9 is a liquid chromatogram of Example 5.
[FIG. 10] FIG. 10 is a liquid chromatogram of Example 6.
[FIG. 11] FIG. 11 is a liquid chromatogram of Example 7.
[FIG. 12] FIG. 12 is a liquid chromatogram of Example 8.
[FIG. 13] FIG. 13 is a liquid chromatogram of Example 9.
[FIG. 14] FIG. 14 is a liquid chromatogram of Example 10.
[FIG. 15] FIG. 15 is a liquid chromatogram of Example 11.
[FIG. 16] FIG. 16 is a liquid chromatogram of Example 12.
[FIG. 17] FIG. 17 is a liquid chromatogram of Example 13.
[FIG. 18] FIG. 18 is a liquid chromatogram of Example 14.
[FIG. 19] FIG. 19 is a liquid chromatogram of Example 15.
[FIG. 20] FIG. 20 is a liquid chromatogram of Example 16.
[FIG. 21] FIG. 21 is a liquid chromatogram of Example 17.
[FIG. 22] FIG. 22 is a liquid chromatogram of Example 18.
[FIG. 23] FIG. 23 is a liquid chromatogram of Example 19.

### DESCRIPTION OF EMBODIMENTS

The present disclosure will be described in detail below with reference to specific embodiments. However, the configurations in embodiments, combinations thereof, and the like are merely examples, and addition, omission, substitution, and other change of the configurations may be made as appropriate within a scope that does not depart from the spirit of the present disclosure. The present disclosure is not limited to the embodiments.

Also, each aspect disclosed in the present specification can be combined with any other feature disclosed herein.

In the present disclosure, "from X to Y" indicating a range means "X or more and Y or less". Furthermore, when a numerical range represented by "X to Y", or "X or greater and Y or less" or "X or greater and Y or less" is described stepwise (e.g., in the order of preference), the upper limit and the lower limit of each numerical range can be optionally combined.

In the present disclosure, a description such as a description of "one or more selected from the group consisting of X, Y, and Z" means any of X, Y, Z, a combination of X and Y, a combination of X and Z, a combination of Y and Z, or a combination of X, Y, and Z.

In the present disclosure, a description such as a description of "X such as x1, x2, and x3" refers to x1, x2, and x3 as examples of X, and does not mean that X is limited to x1, x2, x3, or the like.

### 1. Analysis Method

A first embodiment of the present disclosure is an analysis method for analyzing a sample, the analysis method including a separation step of separating an analyte contained in the sample by chromatography, and a detection step of detecting the analyte separated in the separation step. The mobile phase used in the chromatography contains: one or more oxalic acid compounds selected from the group consisting of oxalic acid, an oxalate represented by the following General Formula (1), and an oxalate represented by the following General Formula (2); and one or more monovalent carboxylic acid compounds selected from the group consisting of formic acid, acetic acid, propionic acid, a formate represented by the following General Formula (3), an acetate represented by the following General Formula (4), and a propionate represented by the following General Formula (5). However, when the oxalic acid compound contains only oxalic acid, the monovalent carboxylic acid compound contains one or more selected from the group consisting of the formate, the acetate, and the propionate, and when the monovalent carboxylic acid compound contains only one or more selected from the group consisting of formic acid, acetic acid, and propionic acid, the oxalic acid compound contains the oxalate. That is, in the present embodiment, either or both of the oxalic acid compound and the monovalent carboxylic acid compound contains any one of the salts.

(COONR₄)₂ (1)

HOOCCOONR₄ (2)

HCOONR₄ (3)

CH₃COONR₄ (4)

CH₃CH₂COONR₄ (5)

In General Formulas (1) to (5), each R independently represents a hydrogen atom or an alkyl group having from 1 to 20 carbons.

According to the present embodiment, a chromatogram having excellent peak shape symmetry (hereinafter, also referred to as "peak symmetry") for the analyte can be obtained.

### 1-1. Sample

The sample to be analyzed by the analysis method according to the present embodiment contains a substance to be analyzed in various fields such as the biochemical field, the medical field, the pharmaceutical field, the agricultural field, the food products field, and the materials field.

More specifically, examples of the analyte contained in the sample include compounds having a phosphate group such as a nucleic acid, a ribonucleic acid, a nucleic acid derivative, a nucleotide, a nucleotide derivative, a sugar phosphate, a sugar nucleotide, and a phospholipid; enantiomer mixtures such as DL-tyrosine, DL-tryptophan, and DL-phenylalanine; and polyvalent carboxylic acid compounds such as isocitric acid, malic acid, and tartaric acid. These analytes may form a salt.

Examples of the nucleic acid derivative and the nucleotide derivative include phosphorothioates in which a phosphate group in a nucleic acid and a nucleotide is converted to a thiophosphate group; phosphoramidates, phosphorodiamidates, and the like in which a phosphate group in a nucleic acid derivative and a nucleotide derivative is converted to a phosphoramide group; a locked nucleic acid (LNA) in which an oxygen atom at the 2'-position and a carbon atom at the 4'-position of a sugar skeleton are crosslinked by a methylene group; 2'-O-Me nucleic acids in which a hydroxy group at the 2'-position of a sugar skeleton is methoxylated; and 2'-O-MOE nucleic acids in which a hydroxy group at the 2'-position of a sugar skeleton is methoxyethylated.

Among these, the compounds having a phosphate group and the polyvalent carboxylic acid compounds are substances recognized as being liable to be adsorbed onto a metal material constituting a pipe or filter of a chromatograph, and a flow cell of a detector, for example, and thus, cause a decrease in peak symmetry of a chromatogram. In contrast, according to the analysis method of the present embodiment, a chromatogram having excellent peak symmetry can be obtained even with these compounds. In addition, in typical analysis methods, the compounds having a phosphate group and the polyvalent carboxylic acid compounds are associated with problems such as increased noise with respect to the desired peak intensity and low detection sensitivity. However, according to the analysis method of the present embodiment, noise can be suppressed, and high detection sensitivity can be realized. In Examples described below, adenosine triphosphate (ATP) sodium salt, which is a compound having a phosphate group, was analyzed by the analysis method according to the present embodiment, and the results demonstrate that a chromatogram having excellent peak symmetry, low noise, and high detection sensitivity can be obtained. Therefore, the analysis method according to the present embodiment can be suitably used for analysis of a compound having a phosphate group or a polyvalent carboxylic acid compound.

### 1-2. Chromatography

In the separation step, chromatography is used to separate the analyte contained in the sample. The chromatography used in the present embodiment is not particularly limited, and examples thereof include liquid chromatography and supercritical fluid chromatography.

Examples of the liquid chromatography include, but are not limited to, normal phase chromatography, reverse phase chromatography, size exclusion chromatography, and ion exchange chromatography. In terms of excellent detectability, the liquid chromatography is preferably reverse phase chromatography, hydrophilic interaction chromatography, or ion exchange chromatography, and is more preferably reverse phase chromatography or hydrophilic interaction chromatography.

The chromatography can be carried out using a commercially available chromatograph such as a liquid chromatograph or a supercritical fluid chromatograph. The various conditions such as the column equilibration conditions and flow rate can be appropriately selected depending on, for example, the column size, the sample volume, and the type of the mobile phase.

### 1-3. Mobile Phase

The mobile phase used in the chromatography contains an oxalic acid compound and a monovalent carboxylic acid compound. In chromatography, the mobile phase is a fluid that is poured into a stationary phase together with the sample, moves together with each component in the sample such as the analyte, and subsequently elutes each component in the sample from the stationary phase. Hereinafter, the components contained in the mobile phase, including the oxalic acid compound and the monovalent carboxylic acid compound, will be described in greater detail.

### Oxalic Acid Compound

The oxalic acid compound contained in the mobile phase is one or more selected from the group consisting of oxalic acid and an oxalate. The oxalate is represented by General Formula (1) or (2). That is, the oxalate is a salt of an oxalate anion and a cation represented by NR₄⁺.

When the mobile phase contains two or more oxalic acid compounds, the combination and the ratio of each of the oxalic acid compounds are not particularly limited.

R is a hydrogen atom or an alkyl group, and the number of carbons of the alkyl group is usually from 1 to 20, preferably from 1 to 16, more preferably from 1 to 8, further preferably from 1 to 4, and particularly preferably 2 or 3.

Specific examples of the alkyl group include a methyl group, an ethyl group, an n-propyl group, an isopropyl group, an n-butyl group, a sec-butyl group, a tert-butyl group, an isobutyl group, an n-pentyl group, an isopentyl group, a neopentyl group, an n-hexyl group, an n-heptyl group, an n-octyl group, a 2-ethylhexyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-icosyl group, and an isomer group thereof.

Examples of the oxalate include ammonium oxalate; monoalkylammonium salts of oxalic acid, such as a methylammonium salt of oxalic acid, an ethylammonium salt of oxalic acid, and a butylammonium salt of oxalic acid; dialkylammonium salts of oxalic acid, such as a dimethylammonium salt of oxalic acid, a diethylammonium salt of oxalic acid, an ethylmethylammonium salt of oxalic acid, and a dibutylammonium salt of oxalic acid; trialkylammonium salts of oxalic acid, such as a trimethylammonium salt of oxalic acid, a triethylammonium salt of oxalic acid, and a tributylammonium salt of oxalic acid; and tetraalkylammonium salts of oxalic acid, such as a tetramethylammonium salt of oxalic acid, a tetraethylammonium salt of oxalic acid, a tetrabutylammonium salt of oxalic acid, a hexadecyltrimethyl ammonium salt of oxalic acid, and an octadecyltrimethyl ammonium salt of oxalic acid.

The concentration of the oxalic acid compound in the mobile phase is not particularly limited and may be selected depending on, for example, the type of the sample and the desired retention time, but the concentration thereof is usually from 0.01 mM to 50.0 mM, preferably from 0.07 mM to 50.0 mM, more preferably from 0.1 mM to 50.0 mM, further preferably 0.1 mM to 20.0 mM, still further preferably from 0.1 mM to 5.0 mM, particularly preferably from 0.35 mM to 1.0 mM, and most preferably from 0.5 mM to 1.0 mM. By setting the concentration of the oxalic acid compound to be within the above range, precipitation of the oxalic acid compound can be suppressed, and peak symmetry in a chromatogram can be improved. Moreover, by setting the concentration of the oxalic acid compound to the above lower limit or greater, a peak can be detected with sufficient intensity. Furthermore, when the concentration of the oxalic acid compound is within the above range, contamination in a mass spectrometry (MS) detector is more effectively suppressed, and thus, such a concentration is effective in that applicability of the mobile phase to MS detection is enhanced.

In the present disclosure, the "concentration of the oxalic acid compound" means the concentration of oxalate ions.

### Monovalent Carboxylic Acid Compound

The monovalent carboxylic acid compound contained in the mobile phase is one or more selected from the group consisting of formic acid, acetic acid, propionic acid, a formate, an acetate, and a propionate. The formate, the acetate, and the propionate are represented by General Formulas (3), (4), and (5), respectively. That is, the formate is a salt of a formate anion and a cation represented by NR₄⁺, the acetate is a salt of an acetate anion and the cation represented by NR₄⁺, the propionate is a salt of a propionate anion and the cation represented by NR₄⁺. The cation represented by NR₄⁺ is synonymous with the cation component of the oxalate.

When the mobile phase contains two or more monovalent carboxylic acid compounds, the combination and the ratio of each of the monovalent carboxylic acid compounds are not particularly limited.

When the mobile phase contains an oxalate and one or more monovalent carboxylates selected from the group consisting of a formate, an acetate, and a propionate, the anion component of the oxalate and the anion component of the monovalent carboxylic acid may be the same or different, but are preferably the same.

Examples of the formate include ammonium formate; monoalkylammonium salts of formic acid, such as a methylammonium salt of formic acid, an ethylammonium salt of formic acid, and a butylammonium salt of formic acid; dialkylammonium salts of formic acid, such as a dimethylammonium salt of formic acid, a diethylammonium salt of formic acid, an ethylmethylammonium salt of formic acid, and a dibutylammonium salt of formic acid; trialkylammonium salts of formic acid, such as a trimethylammonium salt of formic acid, a triethylammonium salt of formic acid, and a tributylammonium salt of formic acid; and tetraalkylammonium salts of formic acid, such as a tetramethylammonium salt of formic acid, a tetraethylammonium salt of formic acid, a tetrabutylammonium salt of formic acid, a hexadecyltrimethyl ammonium salt of formic acid, and an octadecyltrimethyl ammonium salt of formic acid.

Examples of the acetate include ammonium acetate; monoalkylammonium salts of acetic acid, such as a methylammonium salt of acetic acid, an ethylammonium salt of acetic acid, and a butylammonium salt of acetic acid; dialkylammonium salts of acetic acid, such as a dimethylammonium salt of acetic acid, a diethylammonium salt of acetic acid, an ethylmethylammonium salt of acetic acid, and a dibutylammonium salt of acetic acid; trialkylammonium salts of acetic acid, such as a trimethylammonium salt of acetic acid, a triethylammonium salt of acetic acid, and a tributylammonium salt of acetic acid; and tetraalkylammonium salts of acetic acid, such as a tetramethylammonium salt of acetic acid, a tetraethylammonium salt of acetic acid, a tetrabutylammonium salt of acetic acid, a hexadecyltrimethyl ammonium salt of acetic acid, and an octadecyltrimethyl ammonium salt of acetic acid.

Examples of the propionate include ammonium propionate; monoalkylammonium salts of propionic acid, such as a methylammonium salt of propionic acid, an ethylammonium salt of propionic acid, and a butylammonium salt of propionic acid; dialkylammonium salts of propionic acid, such as a dimethylammonium salt of propionic acid, a diethylammonium salt of propionic acid, an ethylmethylammonium salt of propionic acid, and a dibutylammonium salt of propionic acid; trialkylammonium salts of propionic acid, such as a trimethylammonium salt of propionic acid, a triethylammonium salt of propionic acid, and a tributylammonium salt of propionic acid; and tetraalkylammonium salts of propionic acid, such as a tetramethylammonium salt of propionic acid, a tetraethylammonium salt of propionic acid, a tetrabutylammonium salt of propionic acid, a hexadecyltrimethyl ammonium salt of propionic acid, and an octadecyltrimethyl ammonium salt of propionic acid.

The concentration of the monovalent carboxylic acid compound in the mobile phase is not particularly limited and may be selected depending on, for example, the type of the sample, the desired retention time, and the desired peak shape, but is preferably from 0.1 mM to 500.0 mM, more preferably from 0.1 mM to 100.0 mM, further preferably from 0.1 mM to 50.0 mM, still further preferably from 1.0 mM to 40.0 mM, particularly preferably from 3.5 mM to 20.0 mM, and most preferably from 5.0 mM to 10.0 mM. By setting the concentration of the monovalent carboxylic acid compound to be within the above range, peak symmetry in the chromatogram can be improved. In particular, when the concentration of the monovalent carboxylic acid compound is equal to or less than the above upper limit, peak tailing tends to be further suppressed.

In the present disclosure, the "concentration of the monovalent carboxylic acid compound" means the concentration of monovalent carboxylate ions (the total concentration of the monovalent carboxylate ions when a plurality of monovalent carboxylic acid compounds are contained in the mobile phase). In the present embodiment, it is more preferable that the concentration of the oxalic acid compound is within the above-described range and the concentration of the monovalent carboxylic acid compound is within the above-described range.

In the present embodiment, the ratio of the concentration of the monovalent carboxylic acid compound to the concentration of the oxalic acid compound (concentration of monovalent carboxylic acid compound (mM) / concentration of oxalic acid compound (mM)) is not particularly limited, but is preferably from 1 to 200, more preferably from 1 to 100, further preferably from 1 to 50, still further preferably from 1 to 40, particularly preferably from 1 to 20, especially preferably from 5 to 20, and most preferably from 10 to 20. By setting the concentration ratio of the monovalent carboxylic acid compound to the oxalic acid compound to be within the above range, precipitation of the oxalic acid compound can be suppressed. In addition, when the concentration ratio of the monovalent carboxylic acid compound to the oxalic acid compound is within the above range, contamination in the MS detector is more effectively suppressed, and thus such a concentration ratio is effective in that applicability of the mobile phase to MS detection is enhanced. In the present embodiment, more preferably, both the concentration of the oxalic acid compound and the concentration of the monovalent carboxylic acid compound are within the above-described ranges, and the ratio of the concentration of the monovalent carboxylic acid compound to the concentration of the oxalic acid compound is within the above-described range.

### Solvent

The mobile phase in the present embodiment is a solution in which at least the oxalic acid compound and the monovalent carboxylic acid compound are dissolved in a solvent.

The solvent for the mobile phase in performing separation by liquid chromatography is not particularly limited, but is preferably an organic solvent that can dissolve the analyte. Examples of the solvent include an organic solvent, water, and a mixed solvent of water and an organic solvent, and the solvent is preferably water or a mixed solvent of water and an organic solvent.

The organic solvent is not particularly limited, but examples thereof include acetonitrile, methanol, ethanol, n-propanol, 2-propanol, tetrahydrofuran, 2-methyltetrahydrofuran, dimethylsulfoxide (DMSO), dimethylformamide (DMF), dimethylacetamide (DMAc), acetone, methyl ethyl ketone, diethyl ketone, methyl tert-butyl ether, chloroform, and dichloromethane. Moreover, the organic solvent may be a mixture generally used in chromatography, the mixture including an alcohol and a hydrocarbon having from 5 to 8 carbons.

A single type of organic solvent may be used alone, or two or more types of organic solvents may be used in any combination and ratio.

Among these, from the viewpoint of high chemical stability, low viscosity, and the ability to detect absorbance of the analyte, the organic solvent is preferably one or more selected from acetonitrile, methanol, ethanol, n-propanol, 2-propanol, and tetrahydrofuran, more preferably one or more selected from methanol and acetonitrile, and still more preferably acetonitrile.

When the mixed solvent of water and an organic solvent is used as the solvent, the mixing ratio of water and the organic solvent is not particularly limited, and may be appropriately selected depending on the analyte. The specific content proportion of water in the mixed solvent is, for example, in a range from 5 vol.% to 95 vol.%, from 10 vol.% to 90 vol.%, from 20 vol.% and 80 vol.%, from 30 vol.% to 70 vol.%, from 40 vol.% to 60 vol.%, or from 40 vol.% to 60 vol%.

Examples of the solvent for the mobile phase in performing separation by supercritical fluid chromatography include supercritical carbon dioxide, a mixture of supercritical carbon dioxide and an organic solvent, and a mixture of supercritical carbon dioxide, an organic solvent, and water. As the organic solvent contained in the above mixtures, those described above as the organic solvent used in the mobile phase for liquid chromatography can be suitably used.

### Optional Components

The mobile phase in the present embodiment may contain, in addition to the oxalic acid compound, the monovalent carboxylic acid compound, and the solvent, an optional component within a range that does not inhibit the separation and the detection. Examples of the optional component include a pH adjusting reagent and an internal standard substance. When the detection method in the detection step is mass spectrometry, the optional component is preferably a volatile component or a component that is thermally decomposed into a volatile substance in the MS detector.

A single type of optional component may be used alone, or two or more types of optional components may be used in any combination and ratio.

### Preparation of Mobile Phase

The mobile phase can be prepared by mixing the oxalic acid compound, the monovalent carboxylic acid compound, and the solvent. Alternatively, the mobile phase can be prepared by mixing oxalic acid, one or more monovalent carboxylic acids selected from the group consisting of formic acid, acetic acid, and propionic acid, a cation source represented by NR₄⁺, and the solvent. To mix the cation source represented by NR₄⁺, for example, a solution containing a cation source such as aqueous ammonia and a tetrabutylammonium hydroxide solution can be used. In addition, when a mobile phase containing the above-described optional component is prepared, the optional component may be mixed together with the above-described components at the time of mixing.

Preparation of the mobile phase by the above method can also be carried out by mixing a mobile phase composition described below and the solvent.

1-4. Separation Column

A separation column used for the chromatography is not particularly limited as long as the separation column is a column packed with a stationary phase, and the separation column can be appropriately selected depending on the type of the sample. When an enantiomer mixture is separated into each enantiomer in the separation step, and each enantiomer is detected in the subsequent detection step, a column packed with a chiral stationary phase is used as the separation column.

The stationary phase is not particularly limited, and any stationary phase such as a known stationary phase and a stationary phase based on the known stationary phase can be used.

Examples of the known stationary phase include a stationary phase in which a ligand having a crown ether-like cyclic structure is supported on a support; a stationary phase in which a polysaccharide derivative such as a cellulose derivative and an amylose derivative is supported on a support; a stationary phase in which an alkylsilyl group having from 1 to 32 carbons is chemically bonded to silica gel, such as octadecylsilyl (ODS)-modified silica gel, or a stationary phase called a polar embedded stationary phase in which a polar group such as an amide bond is embedded in an alkyl chain of the alkylsilyl group; a stationary phase in which a group containing a benzene ring (for example, a phenylethyl group and a phenylhexyl group), a halogen-containing group (for example, pentafluorophenylpropyl, pentachlorophenylpropyl, and pentabromophenylpropyl), a group containing a cyano group (for example, a phenylpropyl group), a group having an amide bond (for example, an amidopropyl group), or a group having an alcoholic hydroxyl group is bonded to silica gel; a stationary phase in which an aromatic polyester (for example, polybutylene terephthalate) is supported on a support; a stationary phase in which a heteroaromatic ring polymer (for example, poly(4-vinylpyridine), poly(2-vinylpyridine), poly(3-vinylpyridine), poly(1-vinylimidazole), poly(vinylcarbazole), and poly(vinylpyrazine)) is supported on a support; a stationary phase in which a hydrophilic polymer (for example, poly(2-methacryloyloxyethyl phosphorylcholine), poly(2-(N-3-sulfopropyl-N,N-dimethylammonium)ethyl methacrylate), poly(3-methacryloylamino)propyltrimethyl ammonium chloride), poly(polyethylene glycol monomethyl ether methacrylate), poly(potassium 3-methacryloyloxypropane sulfonate), poly(2-hydroxyethyl methacrylate), poly(acrylamide), and poly(5-methacrylamide-1H-tetrazole)) is supported on a support; a stationary phase in which an amino acid, a cyclic oligosaccharide (for example, cyclodextrin and cyclofructan), a cyclic oligosaccharide with a modified hydroxy group, or a macrocylic amide (for example, vancomycin) is supported on a support; and a stationary phase in which a compound having a zwitterionic functional group such as a sulfobetaine group and a phosphobetaine group is supported on a support.

Examples of the polysaccharide derivative include polysaccharide phenyl carbamate derivatives in which some or all of the hydroxy groups of the polysaccharide are modified with a substituted or unsubstituted phenyl isocyanate; and polysaccharide benzoate derivatives in which some or all of the hydroxy groups of the polysaccharide are modified with a substituted or unsubstituted benzoic acid halide or the like. The polysaccharide modifier is not limited to the above compounds.

In the present disclosure, "supported" may be any of chemical supporting by chemically bonding a substance to be supported to a support, physical supporting by coating or physically adsorbing a substance to be supported onto a support, and a combination thereof.

The support is not particularly limited, and examples thereof include a porous organic support, a porous inorganic support, a porous organic-inorganic composite support, a surface-porous organic support, a surface-porous inorganic support, and a surface-porous organic-inorganic hybrid support.

The term porous support in the present disclosure means a support in which pores are formed throughout the support, and the term surface-porous support means a core-shell support having a structure in which a non-porous core is covered with a porous layer.

Examples of the porous organic support include polystyrene, poly(meth)acrylamide, and poly(meth)acrylate.

Examples of the porous inorganic support include silica, alumina, magnesia, glass, kaolin, titanium oxide, zirconium oxide, silicate, and hydroxyapatite, and silica gel is preferable.

Examples of the porous organic-inorganic composite support include an organic-inorganic composite support formed by a sol-gel reaction between an alkoxysilane and an alkyl-substituted or alkylene-substituted alkoxysilane compound.

### 1-5. Detection Method

In the present embodiment, the analyte separated in the separation step is detected in a detection step. The method for detecting the analyte is not particularly limited, and can be appropriately selected depending on, for example, the type of analyte and the purpose of analysis. Examples of the detection method include absorbance detection such as ultraviolet absorbance detection (UV detection) and ultraviolet-visible light absorbance detection (UV-Vis detection); fluorescence detection (RF detection); differential refractive index detection (RI detection); electrical conductivity detection (CD detection); electrochemical detection (EC detection); mass spectrometry; and other known detection methods. Among these, the detection method is preferably absorbance detection in that light-absorbing substances such as aromatic compounds can be detected widely, and is preferably mass spectrometry (MS) in that various analyses such as qualitative analysis, quantitative analysis, structural analysis, and molecular weight measurements can be carried out. Moreover, the combined use of absorbance detection and mass spectrometry is also preferable.

Here, as known technology, it is known that a phosphoric acid compound and a polyvalent carboxylic acid compound can be analyzed by liquid chromatography-mass spectrometry (LC-MS method) by using a mobile phase to which medronic acid is added (Anal. Chem. 2018, 90, 15, pp. 9457-9464). However, since medronic acid is nonvolatile, there is a problem that the detector is contaminated from the use of the mobile phase to which medronic acid is added. On the other hand, in the analysis method according to the present embodiment, both the oxalic acid compound and the monovalent carboxylic acid compound contained in the mobile phase are volatile, and thus contamination in the mass spectrometer (MS detector) can be more effectively suppressed. Therefore, in the analysis method according to the present embodiment, various detection methods such as UV detection and MS detection can be adopted in the detection step.

The ionization method used in mass spectrometry can be appropriately selected from electrospray ionization (ESI), atmospheric pressure chemical ionization (APCI), atmospheric pressure photoionization (APPI), fast atom bombardment (FAB), thermospray (TSP), and other known ionization methods, depending on, for example, the type of analyte.

The separation step and the detection step may be carried out using a liquid chromatograph and a detection device in combination, or may be carried out using a single separation and detection device. However, it is preferable to carry out the separation step and the detection step using the single separation and detection device. By carrying out the separation step and the detection step using the single separation and detection device, the analyte can be easily analyzed in a short amount of time. Preferable examples of the method for using such a single separation and detection device include liquid chromatography-mass spectrometry (LC-MS method) and liquid chromatography-tandem mass spectrometry (LC-MS/MS method).

### 1-6. Evaluation Method

### Symmetry Factor

The symmetry factor (P_{S}) is a factor indicating the degree of symmetry of a peak, and is represented by the following Equation.${P}_{S} = \frac{{W}_{0.05 h}}{2 f}$

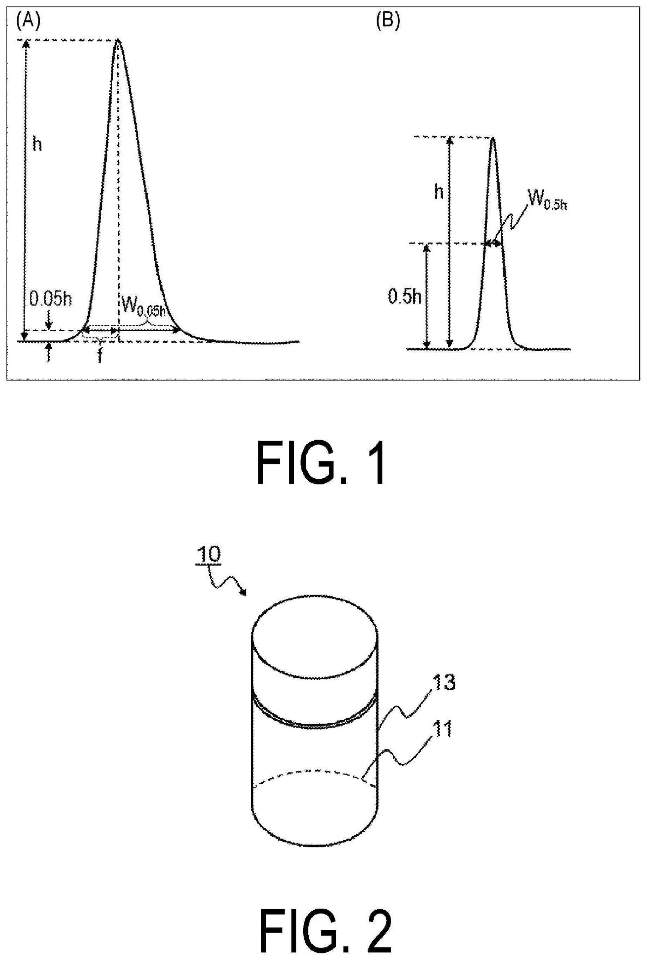

W_{0.05h} represents the peak width at a height of 1/20th the peak height from the baseline of the peak; f represents the distance at the side of leading edge of the peak, obtained by bisecting W_{0.05h} with a perpendicular line drawn from the peak apex to the horizontal axis (see FIG. 1(A)).

When the symmetry factor P_{S} is greater than 1, the peak is determined to be a tailing peak, and when P_{S} is less than 1, the peak is determined to be a leading peak. Moreover, when P_{S} is equal to 1, the peak is determined to be a symmetrical Gaussian peak. The higher the peak symmetry, the closer the symmetry factor P_{S} is to 1.

### Number of Theoretical Plates

The number of theoretical plates (N) is one of indexes representing column efficiency. The number of theoretical plates represents the number of plates in the plate theory, and in general, a larger numerical value indicates a sharper peak, and indicates, a more efficient column. In a Gaussian distribution (normal distribution), the number of theoretical plates is represented by the following Equation.$N = 5.54 \times {\left(\frac{{t}_{R}}{{W}_{0.5 h}}\right)}^{2}$

Here, t_{R} represents the retention time, and W_{0.5h} represents the peak width at half the peak height from the baseline of the peak, that is, the peak full width at half maximum (see FIG. 1(B)).

### Peak Full Width at Half Maximum

The peak full width at half maximum is one of indexes representing column efficiency. The peak full width at half maximum is the peak width (W_{0.5h}) at the midpoint of the peak height (see FIG. 1(B)), and a smaller value of the peak full width at half maximum indicates better column efficiency.

### Signal/Noise Ratio (S/N Ratio)

The S/N ratio is the ratio of a signal (S) to noise (N). The S/N ratio represents a ratio of the intensity (S) from the middle to the top of a noise band, with respect to the width of the baseline (N). The larger the S/N ratio, the greater the signal intensity relative to the baseline, and the easier the peak can be detected.

### Peak Area

The peak area indicates the area value of a detected peak. As described above, there has been a problem that the compound having a phosphate group or the polyvalent carboxylic acid compound is adsorbed to, for example, a metal pipe of a chromatograph. When these compounds are adsorbed to, for example, the metal pipe, problems may arise, such as the peak area in the detector being smaller than the true numerical value or instability in the peak area. Therefore, it can be evaluated that the smaller the peak area is, the more the adsorption of these compounds to the pipe or the like can be suppressed. In addition, when multiple measurements are carried out, it can also be evaluated that as not only the peak area but also the standard deviation of the peak area decreases, the adsorption of these compounds to the pipe or the like can be more stably suppressed.

### 2. Mobile Phase Composition

A second embodiment of the present disclosure is a composition used for a mobile phase of liquid chromatography, the composition containing: one or more oxalic acid compounds selected from the group consisting of oxalic acid, an oxalate represented by the following General Formula (1), and an oxalate represented by the following General Formula (2); and one or more monovalent carboxylic acid compounds selected from the group consisting of formic acid, acetic acid, propionic acid, a formate represented by the following General Formula (3), an acetate represented by the following General Formula (4), and a propionate represented by the following General Formula (5). When the oxalic acid compound contains only oxalic acid, the monovalent carboxylic acid compound contains one or more selected from the group consisting of the formate, the acetate, and the propionate, and when the monovalent carboxylic acid compound contains only one or more selected from the group consisting of formic acid, acetic acid, and propionic acid, the oxalic acid compound contains the oxalate. That is, in the present embodiment, either or both of the oxalic acid compound and the monovalent carboxylic acid compound contains any one of the salts.

(COONR₄)₂ (1)

HOOCCOONR₄ (2)

HCOONR₄ (3)

CH₃COONR₄ (4)

CH₃CH₂COONR₄ (5)

In General Formulas (1) to (5), each R independently represents a hydrogen atom or an alkyl group having from 1 to 20 carbons.

The mobile phase composition according to the present embodiment can be used for preparing a mobile phase used in liquid chromatography in the analysis method according to the first embodiment. For example, the mobile phase can be prepared by dissolving the mobile phase composition according to the present embodiment in a solvent for a mobile phase. The mobile phase composition may contain some of the solvent contained in the mobile phase in the first embodiment, and may contain an optional component that can be contained in the mobile phase.

Details of the oxalic acid compound, the monovalent carboxylic acid compound, the solvent, and the optional component in the present embodiment are as described in the description of the first embodiment. Accordingly, General Formulas (1) to (5) in the present embodiment are respectively synonymous with the General Formulas (1) to (5) in the first embodiment of the present disclosure. However, in the present embodiment, the oxalic acid compound and the monovalent carboxylic acid compound may be hydrates.

### 3. Analytical Kit

A third embodiment of the present disclosure is an analytical kit including the mobile phase composition according to the second embodiment.

FIG. 2 is a diagram schematically showing an example of the analytical kit according to the present embodiment. In FIG. 2, an analytical kit 10 is one in which a mobile phase composition 11 is stored in a vial 13, but the type, the size, and the shape of a container for storing the mobile phase composition 11 are not particularly limited.

The analytical kit 10 may optionally include, in addition to the mobile phase composition, for example, a consumable item used for liquid chromatography and detection.

### EXAMPLES

Hereinafter, the present disclosure will be described more specifically with reference to Examples, but the present disclosure is not limited to the following Examples as long as there is no deviation from the gist of the present disclosure.

### Example 1

### Preparation of Mobile Phase A

In 500 mL of water, 0.0905 g of oxalic acid and 0.3149 g of ammonium formate were dissolved. The pH (25°C) of the resulting aqueous solution was 4.0. This aqueous solution and acetonitrile were mixed at a ratio of 60:40, and a mixed liquid was obtained. Subsequently, the mixed liquid was irradiated with ultrasonic waves using a tabletop ultrasonic cleaner to degas the mixed liquid, and a mobile phase A was obtained. It was visually confirmed that the oxalic acid and the ammonium formate were completely dissolved in the obtained mobile phase A.

### Separation and Detection

A separation column packed with a stationary phase obtained by supporting a phosphobetaine polymer on silica gel was connected to a liquid chromatograph. A sample containing 20 ppm of adenosine triphosphate (ATP) sodium salt was passed through the separation column together with the mobile phase A, and then detection was carried out by a UV detector and by an MS detector, respectively. The conditions for the liquid chromatography and the detection were as indicated below.

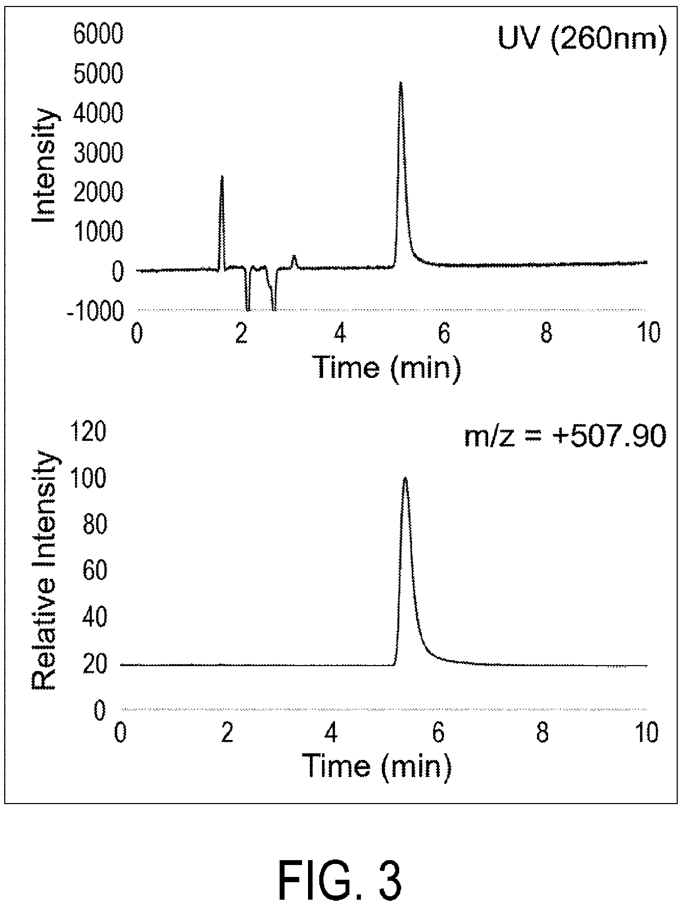

The same analysis as the above analysis was further carried out four times. Representative chromatograms are presented in FIG. 3. In addition, from the five chromatograms, values of the number of theoretical plates, the peak full width at half maximum, the symmetry factor, the S/N ratio, and the peak area were determined according to the methods described above, and the mean values and the standard deviations thereof were calculated. The results are shown in Table 1.

### Liquid Chromatography Conditions

Device: Nexera series (available from Shimadzu Corporation)
Separation column: DCpak PMPC (available from Daicel Corporation; 3 µm, packed in a PEEK liner column tube, 0.21 cm φ × 15 cm)
Injection volume: 1.0 µL
Flow rate: 0.21 mL/min
Column temperature: 40°C

### UV Detection Conditions

UV detector: SPD-M20A (available from Shimadzu Corporation)
Detection wavelength: 260 nm

### Mass Spectrometry Conditions

MS detector: LCMS-2020 (available from Shimadzu Corporation)
Ionization method: electrospray ionization
Ionization mode: positive mode
Measurement mode: SIM (m/z = 507.90)
Desolvation tube temperature: 250°C
Heat block temperature: 400°C
Dry gas flow rate: 15.0 mL/min
Nebulizer flow rate: 1.5 mL/min

### Comparative Example 1

### Preparation of Mobile Phase B

In 500 mL of water, 0.0902 g of oxalic acid was dissolved. The pH (at 25°C) of the resulting aqueous solution was 2.7. A 28% aqueous ammonia solution was added to this obtained aqueous solution to adjust the pH (25°C) of the aqueous solution to 4.0. This aqueous solution and acetonitrile were mixed at a ratio of 90:10, and a mixed liquid was obtained. Subsequently, the mixed liquid was irradiated with ultrasonic waves using a tabletop ultrasonic cleaner to degas the mixed liquid, and a mobile phase B was obtained. It was visually confirmed that the oxalic acid was completely dissolved in the obtained mobile phase B.

The composition of the mobile phase B was adjusted such that the retention time of the ATP sodium salt in liquid chromatography was approximately the same as that in Example 1.

### Separation and Detection

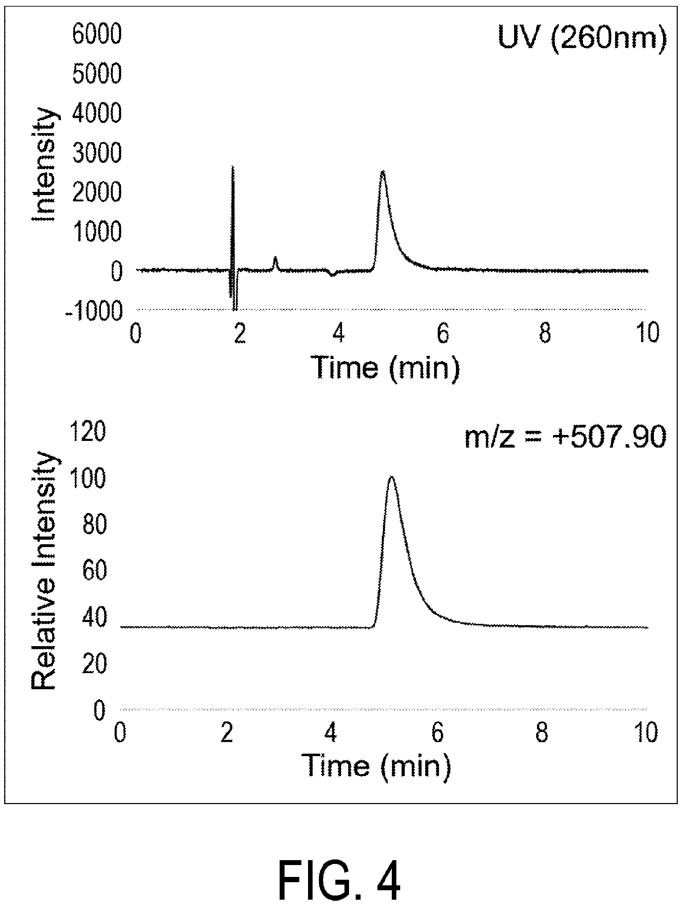

The sample was subjected to separation and detection five times in the same manner as in Example 1 with the exception that the mobile phase B was used in place of the mobile phase A. Representative chromatograms are presented in FIG. 4. In addition, from the five chromatograms, values of the number of theoretical plates, the peak full width at half maximum, the symmetry factor, the S/N ratio, and the peak area were determined according to the methods described above, and the mean values and the standard deviations thereof were calculated. The results are shown in Table 1.

### Comparative Example 2

### Preparation of Mobile Phase C

In 500 mL of water, 0.3150 g of ammonium formate was dissolved. The pH (25°C) of the obtained aqueous solution was 6.1. To this obtained aqueous solution, 98% formic acid was added to adjust the pH (25°C) of the aqueous solution to 4.0. The aqueous solution and acetonitrile were mixed at a ratio of 60:40. Subsequently, the mixed liquid was irradiated with ultrasonic waves using a tabletop ultrasonic cleaner to degas the mixed liquid, and a mobile phase C was obtained. It was visually confirmed that the ammonium formate was completely dissolved in the obtained mobile phase C.

The composition of the mobile phase C was adjusted such that the retention time of the ATP sodium salt in liquid chromatography was approximately the same as that in Example 1.

### Separation and Detection

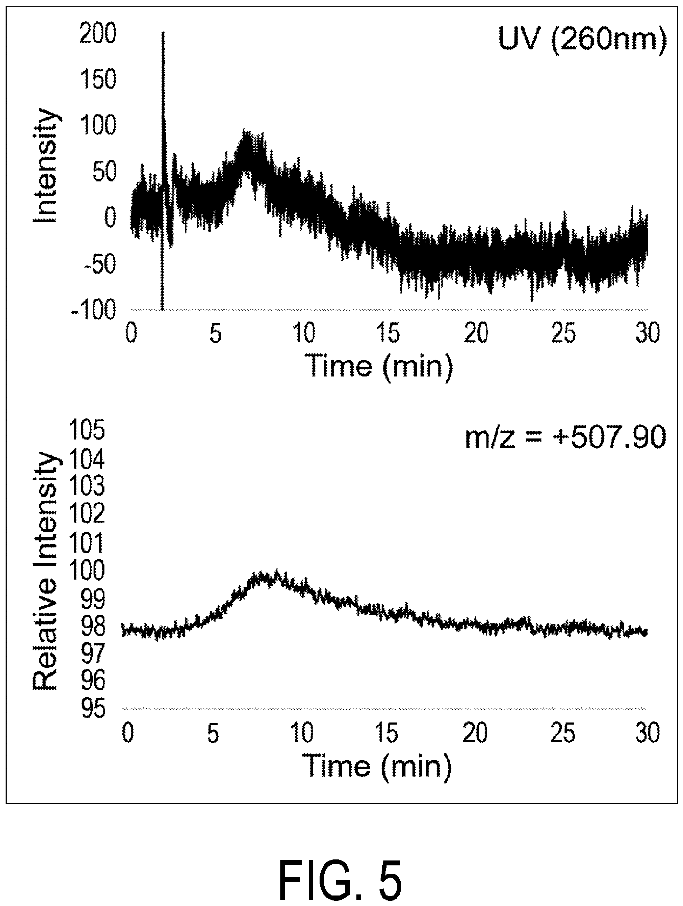

The sample was subjected to separation and detection five times in the same manner as in Example 1 with the exception that the mobile phase C was used in place of the mobile phase A. Representative chromatograms are presented in FIG. 5. In addition, from the five chromatograms, values of the number of theoretical plates, the peak full width at half maximum, the symmetry factor, the S/N ratio, and the peak area were determined according to the methods described above, and the mean values and the standard deviations thereof were calculated. The results are shown in Table 1.

### [Table 1]

**Table 1**

| | Detection | Number of Theoretical Plates | Peak Full Width at Half Maximum (min) | Symmetry Factor | S/N Ratio | Peak area |
|---|---|---|---|---|---|---|
| Example 1 | UV detection | 7154±19 | 0.14±0.00 | 1.84±0.04 | 11.36±0.32 | 50397±365 |
| | MS detection | 2785±65 | 0.24±0.00 | 2.10±0.03 | 481.9±42.3 | 185773±2692 |
| Comparative Example 1 | UV detection | 1778±18 | 0.27±0.00 | 2.49±0.09 | 5.95±0.12 | 52823±497 |
| | MS detection | 619±8 | 0.49±0.00 | 2.44±0.06 | 252.2±54.1 | 148808±4454 |
| Comparative Example 2 | UV detection | * | * | * | 0.59±0.03 | * |
| | MS detection | 11±1 | 5.46±0.37 | 5.18±6.70 | 6.0±1.0 | 25729±1498 |

| | | | | | | |
|---|---|---|---|---|---|---|
| *: The signal/noise ratio (S/N) was 1 or less, and therefore the description was omitted. | | | | | | |

From Table 1 and FIG. 3 to 5, it was found that in comparison to Comparative Example 1 using the oxalic acid solution as the mobile phase and Comparative Example 2 using the ammonium formate solution as the mobile phase, Example 1, which used a mobile phase prepared by dissolving oxalic acid and ammonium formate in water and acetonitrile, had a higher number of theoretical plates and a smaller peak full width at half maximum in liquid chromatography, and thus the column efficiency was better in Example 1. It is also clear that in Example 1, the symmetry factor is smaller than in Comparative Example 1 and Comparative Example 2, and thus, the excellent peak shape symmetry of the ATP sodium salt is exhibited. Furthermore, it was confirmed that in Example 1, the peak of the ATP sodium salt was sharper than those in Comparative Example 2 and Comparative Example 3, and the detection sensitivity was high in both UV detection and MS detection.

Moreover, as indicated in Table 1, the S/N ratio of the liquid chromatogram was large in Comparative Example 2 using the ammonium formate solution as the mobile phase, and Comparative Example 1 using the oxalic acid solution as the mobile phase had the second largest S/N ratio after that of Comparative Example 2. On the other hand, it was found that in Example 1 in which a solution prepared by dissolving oxalic acid and ammonium formate was used as the mobile phase, the S/N ratio was smaller than those in Comparative Example 1 and Comparative Example 2, and the signal intensity was large with respect to the noise width.

Example 1 and Comparative Example 1 had compatible peak areas in both the detection by UV detection and the detection by MS detection, but Example 1 had a larger number of theoretical plates, a larger S/N ratio, and a smaller peak full width at half maximum than those of Comparative Example 1, and also had a symmetry factor closer to 1 than Comparative Example 1. From these results, it is found that in Example 1, high peak symmetry, column efficiency, detection sensitivity, and peak symmetry were successfully achieved by performing liquid chromatography using the mobile phase prepared by dissolving oxalic acid and ammonium formate.

### Example 2

### Preparation of Mobile Phase D1

In 500 mL of water, 0.0225 g of oxalic acid and 0.3153 g of ammonium formate were dissolved. The pH (25°C) of the resulting aqueous solution was 4.68. Subsequently, the aqueous solution was irradiated with ultrasonic waves using a tabletop ultrasonic cleaner to degas the aqueous solution, and a mobile phase D1 was obtained. It was visually confirmed that the oxalic acid and the ammonium formate were completely dissolved in the obtained mobile phase D1.

### Preparation of Mobile Phase D2

The mobile phase D1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase D2 was obtained. It was visually confirmed that the oxalic acid and the ammonium formate were completely dissolved in the obtained mobile phase D2.

### Separation and Detection

A separation column packed with a stationary phase obtained by supporting a phosphobetaine polymer on silica gel was connected to a liquid chromatograph. A sample containing 100 ppm of each of adenosine monophosphate (AMP) sodium salt, adenosine diphosphate (ADP) sodium salt, and adenosine triphosphate (ATP) sodium salt was passed through the separation column together with the mobile phases D1 and D2, respectively, and then detected by a UV detector and an MS detector. At this time, the AMP sodium salt, the ADP sodium salt, and the ATP sodium salt were eluted in this order. The conditions for the liquid chromatography and the detection were as indicated below.

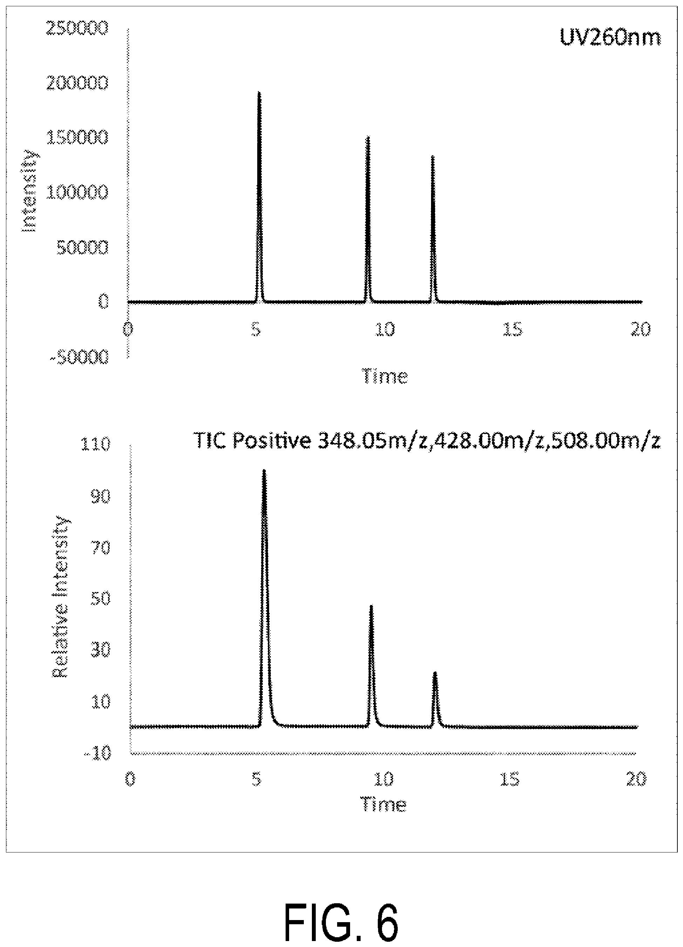

The chromatograms are shown in FIG. 6. In addition, values of the number of theoretical plates, the peak full width at half maximum, the symmetry factor, the S/N ratio, and the peak area obtained by the above-described methods are presented in Table 2.

### Liquid Chromatography Conditions

Device: Nexera series (available from Shimadzu Corporation)
Separation column: DCpak PMPC (available from Daicel Corporation; 3 µm, packed in a PEEK liner column tube, 0.21 cm φ × 15 cm)
Injection volume: 1.0 µL
Flow rate: 0.21 mL/min
Column temperature: 40°C

### Flow Conditions of Mobile Phase and Aqueous Solution

From 0 to 2 minutes: Mobile phase D1 / mobile phase D2 = 0/100
From 2 to 20 minutes: Mobile phase D1 / mobile phase D2 = 0/100 → 80/20
From 20 to 24 minutes: Mobile phase D1 / mobile phase D2 = 80/20
From 24 to 25 minutes: Mobile phase D1 / mobile phase D2 = 80/20 → 0/100
From 25 to 35 minutes: Mobile phase D1 / mobile phase D2 = 0/100

### UV Detection Conditions

UV detector: SPD-M20A (available from Shimadzu Corporation)
Detection wavelength: 260 nm

### Mass Spectrometry Conditions

MS detector: LCMS-2020 (available from Shimadzu Corporation)
Ionization method: electrospray ionization
Ionization mode: positive mode
Measurement mode: SIM (Adenosine phosphates: Positive 348.05 m/z, 428.00 m/z, 508.00 m/z)
Desolvation tube temperature: 250°C
Heat block temperature: 400°C
Dry gas flow rate: 15.0 mL/min
Nebulizer flow rate: 1.5 mL/min

### Example 3

### Preparation of Mobile Phase E1

In 500 mL of water, 0.0450 g of oxalic acid and 0.3153 g of ammonium formate were dissolved. The pH (25°C) of the resulting aqueous solution was 4.38. Subsequently, the aqueous solution was irradiated with ultrasonic waves using a tabletop ultrasonic cleaner to degas the aqueous solution, and a mobile phase E1 was obtained. It was visually confirmed that the oxalic acid and the ammonium formate were completely dissolved in the mobile phase E1.

### Preparation of Mobile Phase E2

The mobile phase E1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase E2 was obtained. It was visually confirmed that the oxalic acid and the ammonium formate were completely dissolved in the obtained mobile phase E2.

### Separation and Detection

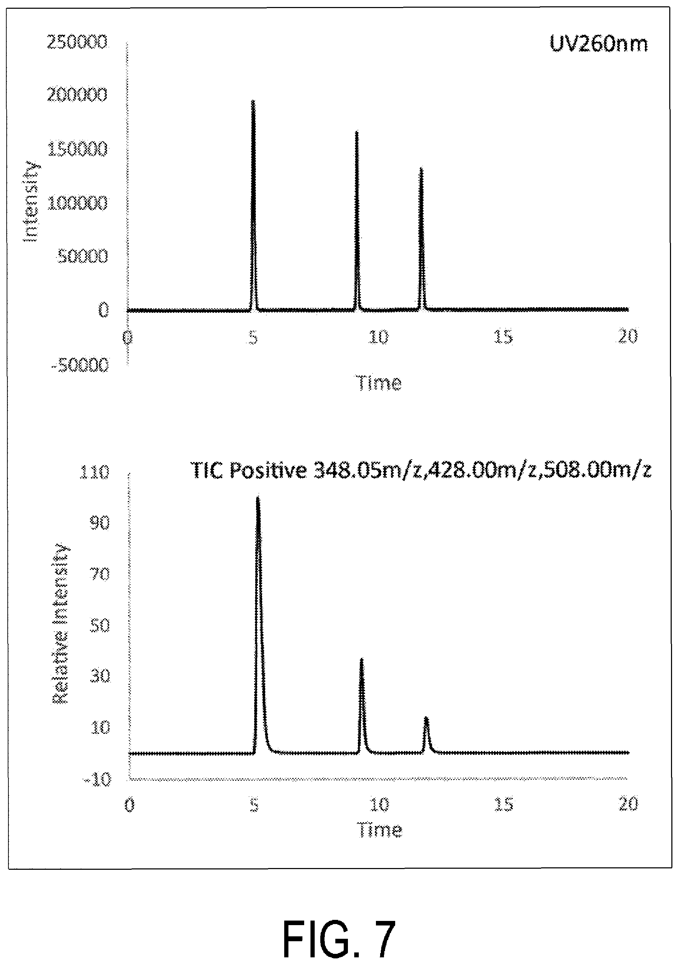

The sample was subjected to separation and detection in the same manner as in Example 2 with the exception that the mobile phase E1 was used in place of the mobile phase D1, and the mobile phase E2 was used in place of the mobile phase D2. Representative chromatograms are shown in FIG. 7. In addition, values of the number of theoretical plates, the peak full width at half maximum, the symmetry factor, the S/N ratio, and the peak area obtained by the above-described methods are presented in Table 2.

### Example 4

### Preparation of Mobile Phase F1

In 500 mL of water, 0.00450 g of oxalic acid and 0.3153 g of ammonium formate were dissolved. The pH (25°C) of the resulting aqueous solution was 5.24. Subsequently, the aqueous solution was irradiated with ultrasonic waves using a tabletop ultrasonic cleaner to degas the aqueous solution, and a mobile phase F1 was obtained. It was visually confirmed that the oxalic acid and the ammonium formate were completely dissolved in the obtained mobile phase F1.

### Preparation of Mobile Phase F2

The mobile phase F1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase F2 was obtained. It was visually confirmed that the oxalic acid and the ammonium formate were completely dissolved in the obtained mobile phase F2.

### Separation and Detection

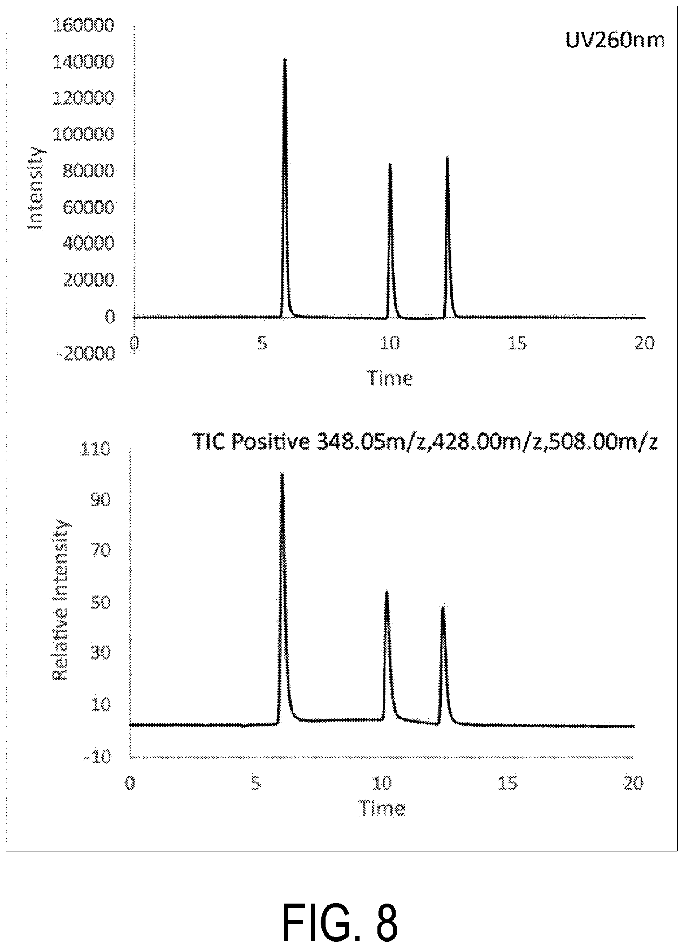

The sample was subjected to separation and detection in the same manner as in Example 2 with the exception that the mobile phase F1 was used in place of the mobile phase D1, and the mobile phase F2 was used in place of the mobile phase D2. Representative chromatograms are shown in FIG. 8. In addition, values of the number of theoretical plates, the peak full width at half maximum, the symmetry factor, the S/N ratio, and the peak area obtained by the above-described methods are presented in Table 2.

### Example 5

### Preparation of Mobile Phase G1

In 500 mL of water, 0.0225 g of oxalic acid and 0.6306 g of ammonium formate were dissolved. The pH (25°C) of the resulting aqueous solution was 4.96. Subsequently, the aqueous solution was irradiated with ultrasonic waves using a tabletop ultrasonic cleaner to degas the aqueous solution, and a mobile phase G1 was obtained. It was visually confirmed that the oxalic acid and the ammonium formate were completely dissolved in the obtained mobile phase G1.

### Preparation of Mobile Phase G2

The mobile phase G1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase G2 was obtained. It was visually confirmed that the oxalic acid and the ammonium formate were completely dissolved in the obtained mobile phase G2.

### Separation and Detection

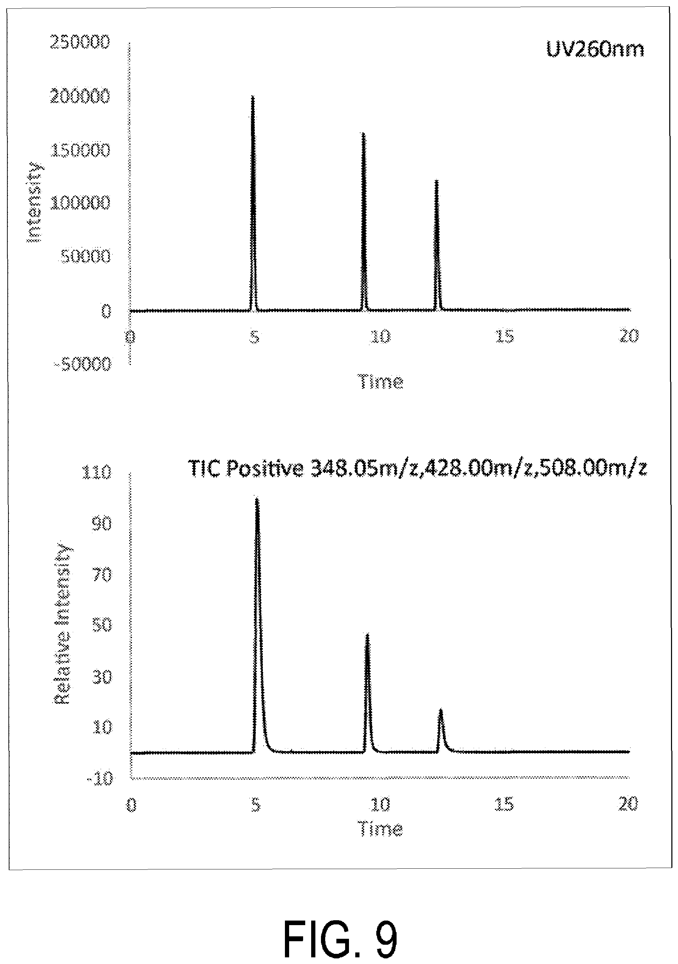

The sample was subjected to separation and detection in the same manner as in Example 2 with the exception that the mobile phase G1 was used in place of the mobile phase D1, and the mobile phase G2 was used in place of the mobile phase D2. Representative chromatograms are shown in FIG. 9. In addition, values of the number of theoretical plates, the peak full width at half maximum, the symmetry factor, the S/N ratio, and the peak area obtained by the above-described methods are presented in Table 2.

### Example 6

### Preparation of Mobile Phase H1

In 500 mL of water, 0.0450 g of oxalic acid and 0.6306 g of ammonium formate were dissolved. The pH (25°C) of the resulting aqueous solution was 4.67. Subsequently, the aqueous solution was irradiated with ultrasonic waves using a tabletop ultrasonic cleaner to degas the aqueous solution, and a mobile phase H1 was obtained. It was visually confirmed that the oxalic acid and the ammonium formate were completely dissolved in the obtained mobile phase H1.

### Preparation of Mobile Phase H2

The mobile phase H1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase H2 was obtained. It was visually confirmed that the oxalic acid and the ammonium formate were completely dissolved in the obtained mobile phase H2.

### Separation and Detection

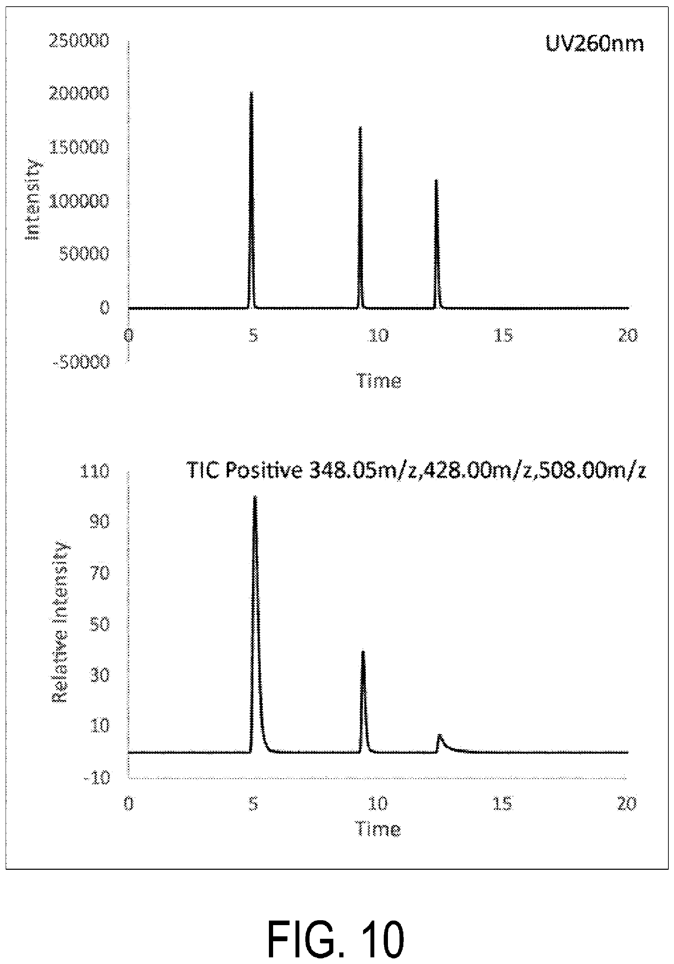

The sample was subjected to separation and detection in the same manner as in Example 2 with the exception that the mobile phase H1 was used in place of the mobile phase D1, and the mobile phase H2 was used in place of the mobile phase D2. Representative chromatograms are shown in FIG. 10. In addition, values of the number of theoretical plates, the peak full width at half maximum, the symmetry factor, the S/N ratio, and the peak area obtained by the above-described methods are presented in Table 2.

### Example 7

### Preparation of Mobile Phase I1

In 500 mL of water, 0.00450 g of oxalic acid and 0.6306 g of ammonium formate were dissolved. The pH (25°C) of the resulting aqueous solution was 5.31. Subsequently, the aqueous solution was irradiated with ultrasonic waves using a tabletop ultrasonic cleaner to degas the aqueous solution, and a mobile phase I1 was obtained. It was visually confirmed that the oxalic acid and the ammonium formate were completely dissolved in the obtained mobile phase I1.

### Preparation of Mobile Phase I2

The mobile phase I1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase I2 was obtained. It was visually confirmed that the oxalic acid and the ammonium formate were completely dissolved in the obtained mobile phase I2.

### Separation and Detection

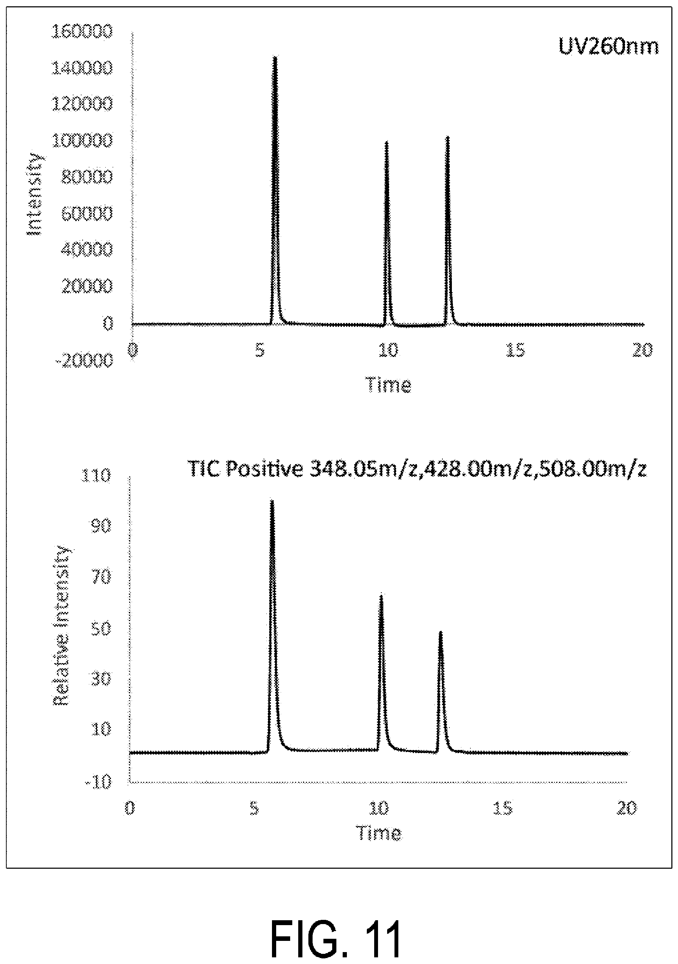

The sample was subjected to separation and detection in the same manner as in Example 2 with the exception that the mobile phase I1 was used in place of the mobile phase D1, and the mobile phase I2 was used in place of the mobile phase D2. Representative chromatograms are shown in FIG. 11. In addition, values of the number of theoretical plates, the peak full width at half maximum, the symmetry factor, the S/N ratio, and the peak area obtained by the above-described methods are presented in Table 2.

### Example 8

### Preparation of Mobile Phase J1

In 500 mL of water, 0.00225 g of oxalic acid and 0.1576 g of ammonium formate were dissolved. The pH (25°C) of the resulting aqueous solution was 4.44. Subsequently, the aqueous solution was irradiated with ultrasonic waves using a tabletop ultrasonic cleaner to degas the aqueous solution, and a mobile phase J1 was obtained. It was visually confirmed that the oxalic acid and the ammonium formate were completely dissolved in the obtained mobile phase J1.

### Preparation of Mobile Phase J2

In 500 mL of water, 0.00225 g of oxalic acid and 0.1576 g of ammonium formate were dissolved. The pH (25°C) of the resulting aqueous solution was 4.44. The aqueous solution and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase J2 was obtained. It was visually confirmed that the oxalic acid and the ammonium formate were completely dissolved in the obtained mobile phase J2.

### Separation and Detection

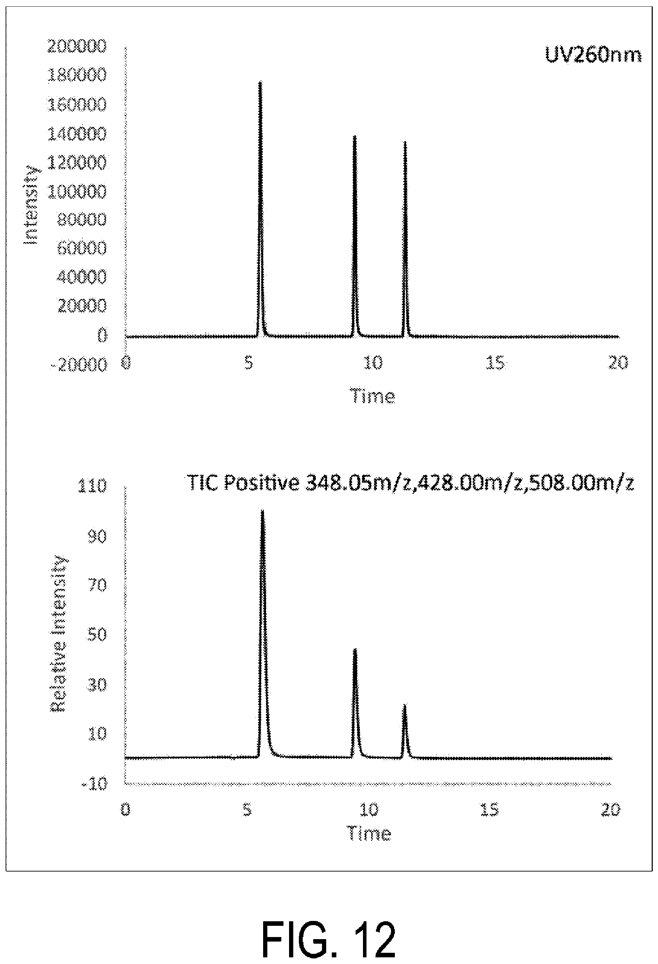

The sample was subjected to separation and detection in the same manner as in Example 2 with the exception that the mobile phase J1 was used in place of the mobile phase D1, and the mobile phase J2 was used in place of the mobile phase D2. Representative chromatograms are shown in FIG. 12. In addition, values of the number of theoretical plates, the peak full width at half maximum, the symmetry factor, the S/N ratio, and the peak area obtained by the above-described methods are presented in Table 2.

### Example 9

### Preparation of Mobile Phase K1

In 500 mL of water, 0.0450 g of oxalic acid and 0.1576 g of ammonium formate were dissolved. The pH (25°C) of the resulting aqueous solution was 4.08. Subsequently, the aqueous solution was irradiated with ultrasonic waves using a tabletop ultrasonic cleaner to degas the aqueous solution, and a mobile phase K1 was obtained. It was visually confirmed that the oxalic acid and the ammonium formate were completely dissolved in the obtained mobile phase K1.

### Preparation of Mobile Phase K2

In 500 mL of water, 0.0450 g of oxalic acid and 0.1576 g of ammonium formate were dissolved. The pH (25°C) of the resulting aqueous solution was 4.08. The aqueous solution and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase K2 was obtained. It was visually confirmed that the oxalic acid and the ammonium formate were completely dissolved in the obtained mobile phase K2.

### Separation and Detection

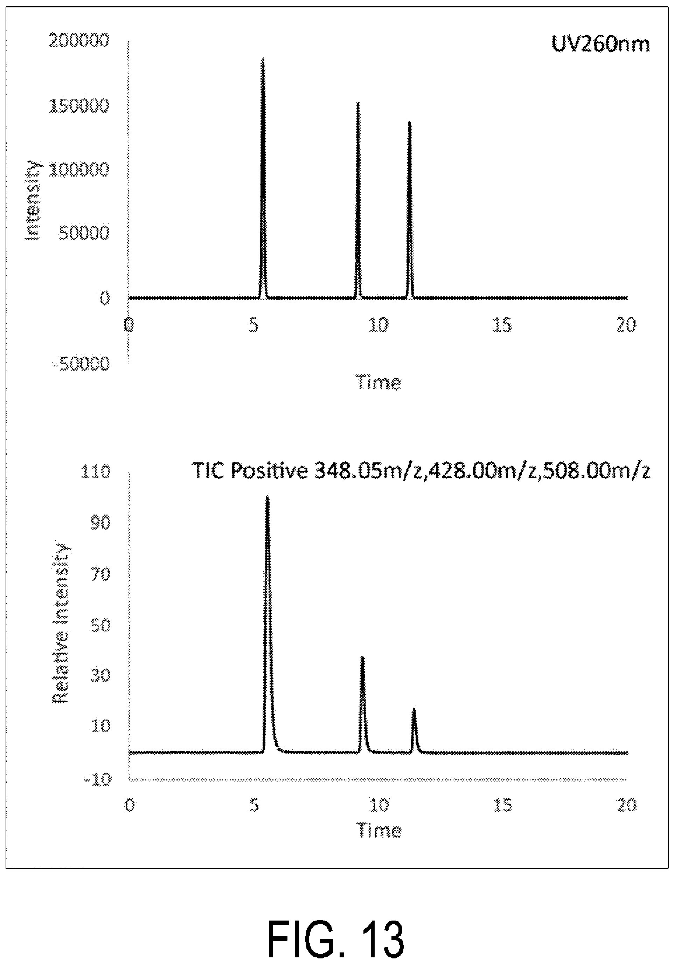

The sample was subjected to separation and detection in the same manner as in Example 2 with the exception that the mobile phase K1 was used in place of the mobile phase D1, and the mobile phase K2 was used in place of the mobile phase D2. Representative chromatograms are presented in FIG. 13. In addition, values of the number of theoretical plates, the peak full width at half maximum, the symmetry factor, the S/N ratio, and the peak area obtained by the above-described methods are presented in Table 2.

### Example 10

### Preparation of Mobile Phase L1

In 500 mL of water, 0.0045 g of oxalic acid and 0.1576 g of ammonium formate were dissolved. The pH (25°C) of the resulting aqueous solution was 5.22. Subsequently, the aqueous solution was irradiated with ultrasonic waves using a tabletop ultrasonic cleaner to degas the aqueous solution, and a mobile phase L1 was obtained. It was visually confirmed that the oxalic acid and the ammonium formate were completely dissolved in the obtained mobile phase L1.

### Preparation of Mobile Phase L2

The mobile phase L1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase L2 was obtained. It was visually confirmed that the oxalic acid and the ammonium formate were completely dissolved in the obtained mobile phase L2.

### Separation and Detection

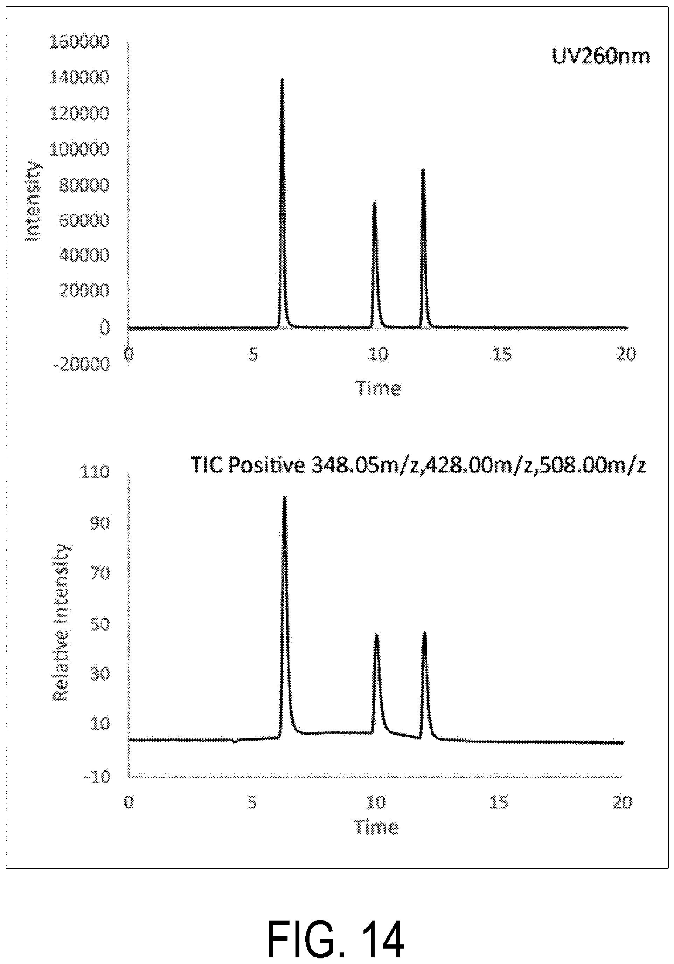

The sample was subjected to separation and detection in the same manner as in Example 2 with the exception that the mobile phase L1 was used in place of the mobile phase D1, and the mobile phase L2 was used in place of the mobile phase D2. Representative chromatograms are presented in FIG. 14. In addition, values of the number of theoretical plates, the peak full width at half maximum, the symmetry factor, the S/N ratio, and the peak area obtained by the above-described methods are presented in Table 2.

### [Table 2]

**Table 2**

| | Detection | Mobile Phases D1 to L1 | | Mobile Phase D2 to L2 | | Number of Theoretical Plates | Peak Full Width at Half Maximum (min) | Symmetry Factor | S/N Ratio | Peak area |
|---|---|---|---|---|---|---|---|---|---|---|
| | | Oxalic Acid Concentration (mM) | Ammonium Formate Concentration (mM) | Oxalic Acid Concentration (mM) | Ammonium Formate Concentration (mM) | | | | | |
| Example 2 | UV detection | 0.50 | 10.0 | 0.35 | 7.0 | 98140 | 0.089 | 1.319 | 1238.68 | 787553 |
| | MS detection | | | | | 37926 | 0.146 | 1.505 | 5478.60 | 5858177 |
| Example 3 | UV detection | 1.00 | 10.0 | 0.70 | 7.0 | 89093 | 0.092 | 1.259 | 944.84 | 790164 |
| | MS detection | | | | | 27580 | 0.169 | 1.699 | 9127.69 | 7126102 |
| Example 4 | UV detection | 0.10 | 10.0 | 0.07 | 7.0 | 58564 | 0.119 | 1.948 | 934.08 | 739332 |
| | MS detection | | | | | 20840 | 0.203 | 1.790 | 1153.64 | 2598671 |
| Example 5 | UV detection | 0.50 | 20.0 | 0.35 | 14.0 | 87256 | 0.098 | 1.618 | 1114.74 | 779873 |
| | MS detection | | | | | 25377 | 0.184 | 4.837 | 8869.37 | 7918736 |
| Example 6 | UV detection | 1.00 | 20.0 | 0.70 | 14.0 | 87677 | 0.098 | 1.614 | 969.09 | 783872 |
| | MS detection | | | | | 13129 | 0.257 | 1.943 | 6835.38 | 8725404 |
| Example 7 | UV detection | 0.10 | 20.0 | 0.07 | 14.0 | 77483 | 0.104 | 2.135 | 1078.46 | 752957 |
| | MS detection | | | | | 24057 | 0.190 | 1.818 | 2047.30 | 4092731 |
| Example 8 | UV detection | 0.50 | 5.0 | 0.035 | 3.5 | 98265 | 0.085 | 1.175 | 1318.34 | 770548 |
| | MS detection | | | | | 37203 | 0.140 | 1.487 | 1915.00 | 3692108 |
| Example 9 | UV detection | 1.00 | 5.0 | 0.70 | 3.5 | 93452 | 0.087 | 1.119 | 1237.13 | 781910 |
| | MS detection | | | | | 36204 | 0.142 | 1.489 | 5922.77 | 5636141 |
| Example 10 | UV detection | 0.10 | 5.0 | 0.10 | 3.5 | 53249 | 0.121 | 1.691 | 975.82 | 729100 |
| | MS detection | | | | | 20003 | 0.199 | 1.594 | 2708.58 | 3757669 |

### Example 11

### Preparation of Mobile Phase M1

In 500 mL of water, 0.0225 g of oxalic acid and 0.3153 g of ammonium formate were dissolved. The pH (25°C) of the resulting aqueous solution was 4.68. Subsequently, the aqueous solution was irradiated with ultrasonic waves using a tabletop ultrasonic cleaner to degas the aqueous solution, and a mobile phase M1 was obtained. It was visually confirmed that the oxalic acid and the ammonium formate were completely dissolved in the obtained mobile phase M1.

### Preparation of Mobile Phase M2

The mobile phase M1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase M2 was obtained. It was visually confirmed that the oxalic acid and the ammonium formate were completely dissolved in the obtained mobile phase M2.

### Separation and Detection

A separation column packed with a stationary phase obtained by supporting a phosphobetaine polymer on silica gel was connected to a liquid chromatograph. A sample containing 100 ppm of each of cytidine monophosphate (CMP) sodium salt, cytidine diphosphate (CDP) sodium salt, and cytidine triphosphate (CTP) sodium salt was passed through the separation column together with the mobile phases M1 and M2, respectively, and then detected by a UV detector and an MS detector. At this time, the CMP sodium salt, the CDP sodium salt, and the CTP sodium salt were eluted in this order. The conditions for the liquid chromatography and the detection were as indicated below.

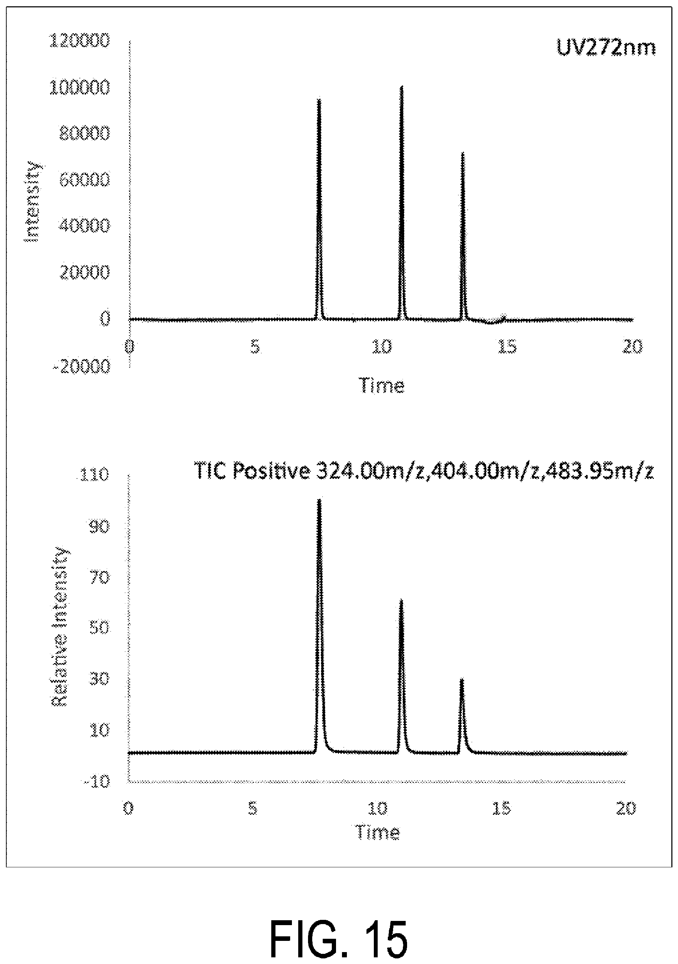

The chromatograms are shown in FIG. 15. In addition, values of the number of theoretical plates, the peak full width at half maximum, the symmetry factor, the S/N ratio, and the peak area obtained by the above-described methods are presented in Table 3.

### Liquid Chromatography Conditions

Device: Nexera series (available from Shimadzu Corporation)
Separation column: DCpak PMPC (available from Daicel Corporation; 3 µm, packed in a PEEK liner column tube, 0.21 cm φ × 15 cm)
Injection volume: 1.0 µL
Flow rate: 0.21 mL/min
Column temperature: 40°C

### Flow Conditions of Mobile Phase and Aqueous Solution

From 0 to 2 minutes: Mobile phase M1 / mobile phase M2 = 0/100
From 2 to 20 minutes: Mobile phase M1 / mobile phase M2 = 0/100 → 80/20
From 20 to 24 minutes: Mobile phase M1 / mobile phase M2 = 80/20
From 24 to 25 minutes: Mobile phase M1 / mobile phase M2 = 80/20 → 0/100
From 25 to 35 minutes: Mobile phase M1 / mobile phase M2 = 0/100

### UV Detection Conditions

UV detector: SPD-M20A (available from Shimadzu Corporation)
Detection wavelength: 272 nm

### Mass Spectrometry Conditions

MS detector: LCMS-2020 (available from Shimadzu Corporation)
Ionization method: electrospray ionization
Ionization mode: positive mode
Measurement mode: SIM (Cytidine phosphates: Positive 324.00 m/z, 404.00 m/z, 483.95 m/z)
Desolvation tube temperature: 250°C
Heat block temperature: 400°C
Dry gas flow rate: 15.0 mL/min
Nebulizer flow rate: 1.5 mL/min

### Example 12

### Preparation of Mobile Phase N1

In 500 mL of water, 0.0450 g of oxalic acid and 0.3153 g of ammonium formate were dissolved. The pH (25°C) of the resulting aqueous solution was 4.38. Subsequently, the aqueous solution was irradiated with ultrasonic waves using a tabletop ultrasonic cleaner to degas the aqueous solution, and a mobile phase N1 was obtained. It was visually confirmed that the oxalic acid and the ammonium formate were completely dissolved in the obtained mobile phase N1.

### Preparation of Mobile Phase N2

The mobile phase N1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase N2 was obtained. It was visually confirmed that the oxalic acid and the ammonium formate were completely dissolved in the obtained mobile phase N2.

### Separation and Detection

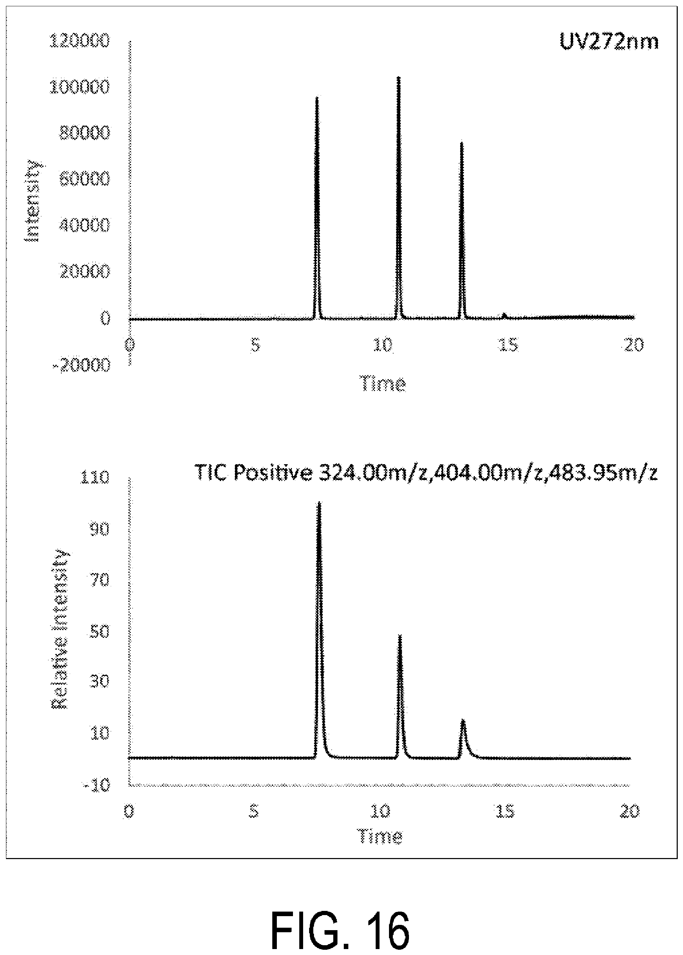

The sample was subjected to separation and detection in the same manner as in Example 11 with the exception that the mobile phase N1 was used in place of the mobile phase M1, and the mobile phase N2 was used in place of the mobile phase M2. Representative chromatograms are presented in FIG. 16. In addition, values of the number of theoretical plates, the peak full width at half maximum, the symmetry factor, the S/N ratio, and the peak area obtained by the above-described methods are presented in Table 3.

### [Example 13]

### Preparation of Mobile Phase O1

In 500 mL of water, 0.00450 g of oxalic acid and 0.3153 g of ammonium formate were dissolved. The pH (25°C) of the resulting aqueous solution was 5.24. Subsequently, the aqueous solution was irradiated with ultrasonic waves using a tabletop ultrasonic cleaner to degas the aqueous solution, and a mobile phase O1 was obtained. It was visually confirmed that the oxalic acid and the ammonium formate were completely dissolved in the obtained mobile phase O1.

### Preparation of Mobile Phase O2

The mobile phase O1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase O2 was obtained. It was visually confirmed that the oxalic acid and the ammonium formate were completely dissolved in the obtained mobile phase O2.

### Separation and Detection

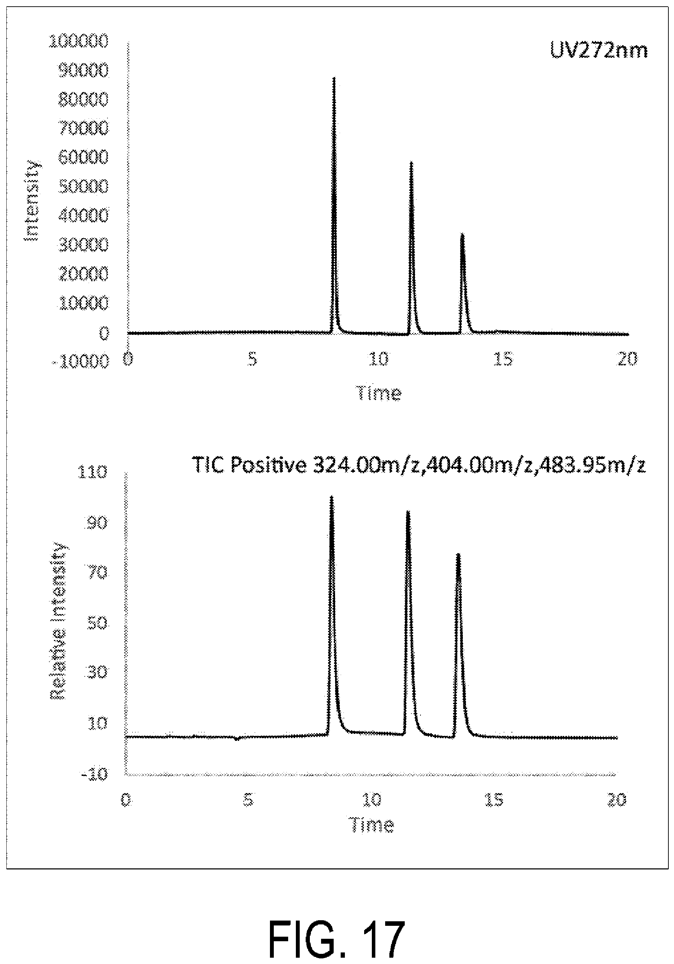

The sample was subjected to separation and detection in the same manner as in Example 11 with the exception that the mobile phase O1 was used in place of the mobile phase M1, and the mobile phase O2 was used in place of the mobile phase M2. Representative chromatograms are shown in FIG. 17. In addition, values of the number of theoretical plates, the peak full width at half maximum, the symmetry factor, the S/N ratio, and the peak area obtained by the above-described methods are presented in Table 3.

### Example 14

### Preparation of Mobile Phase P1

In 500 mL of water, 0.0225 g of oxalic acid and 0.6306 g of ammonium formate were dissolved. The pH (25°C) of the resulting aqueous solution was 4.96. Subsequently, the aqueous solution was irradiated with ultrasonic waves using a tabletop ultrasonic cleaner to degas the aqueous solution, and a mobile phase P1 was obtained. It was visually confirmed that the oxalic acid and the ammonium formate were completely dissolved in the obtained mobile phase P1.

### Preparation of Mobile Phase P2

The mobile phase P1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase P2 was obtained. It was visually confirmed that the oxalic acid and the ammonium formate were completely dissolved in the obtained mobile phase P2.

### Separation and Detection

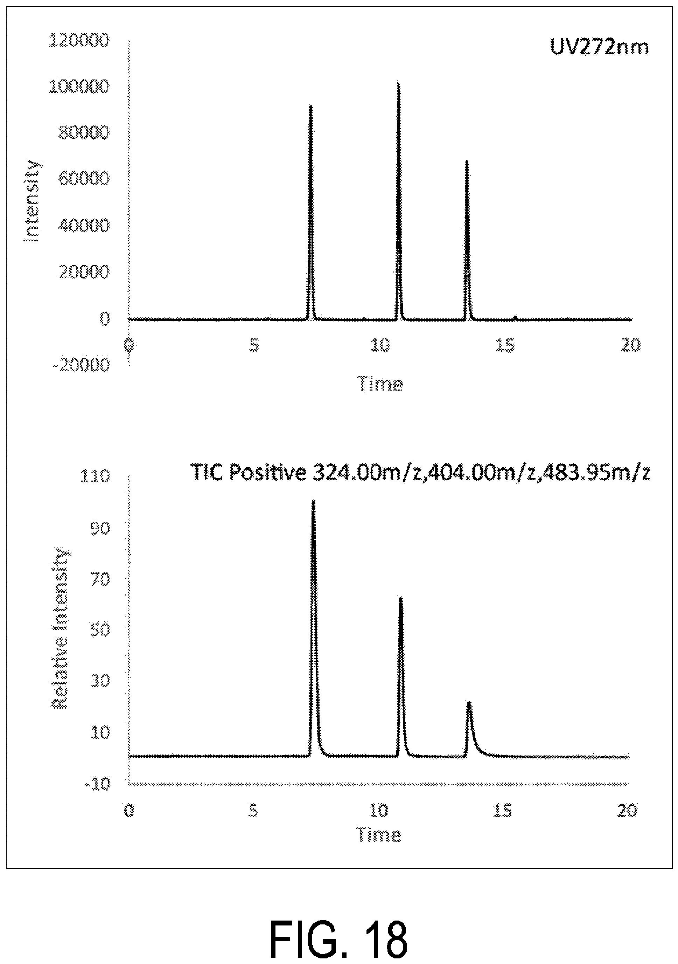

The sample was subjected to separation and detection in the same manner as in Example 11 with the exception that the mobile phase P1 was used in place of the mobile phase M1, and the mobile phase P2 was used in place of the mobile phase M2. Representative chromatograms are shown in FIG. 18. In addition, values of the number of theoretical plates, the peak full width at half maximum, the symmetry factor, the S/N ratio, and the peak area obtained by the above-described methods are presented in Table 3.

### Example 15

### Preparation of Mobile Phase Q1

In 500 mL of water, 0.0450 g of oxalic acid and 0.6306 g of ammonium formate were dissolved. The pH (25°C) of the resulting aqueous solution was 4.67. Subsequently, the aqueous solution was irradiated with ultrasonic waves using a tabletop ultrasonic cleaner to degas the aqueous solution, and a mobile phase Q1 was obtained. It was visually confirmed that the oxalic acid and the ammonium formate were completely dissolved in the obtained mobile phase Q1.

### Preparation of Mobile Phase Q2

The mobile phase Q1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase Q2 was obtained. It was visually confirmed that the oxalic acid and the ammonium formate were completely dissolved in the obtained mobile phase Q2.

### Separation and Detection

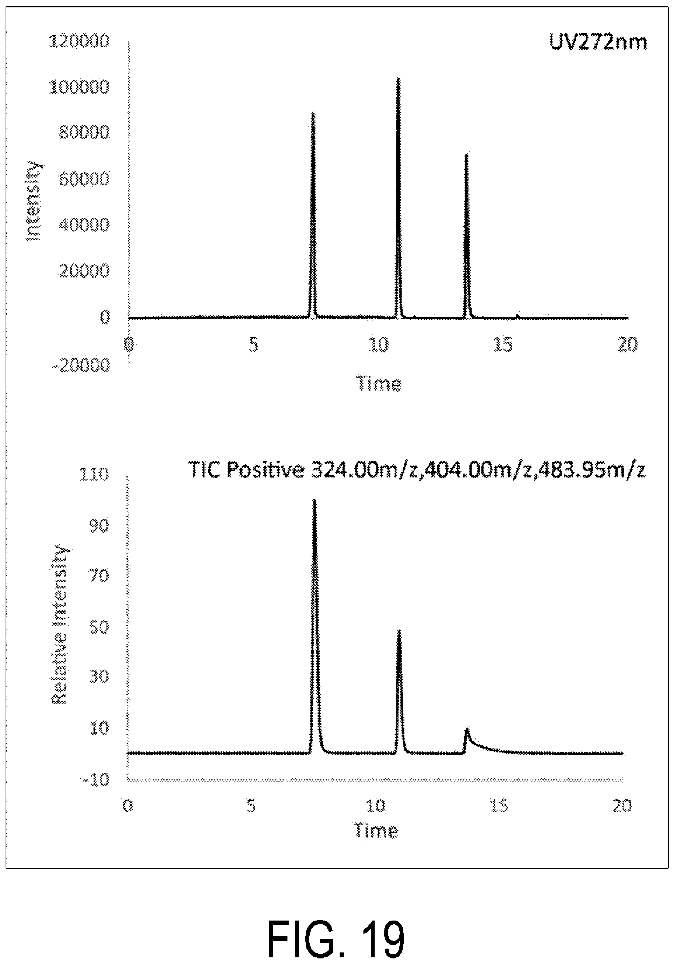

The sample was subjected to separation and detection in the same manner as in Example 11 with the exception that the mobile phase Q1 was used in place of the mobile phase M1, and the mobile phase Q2 was used in place of the mobile phase M2. Representative chromatograms are shown in FIG. 19. In addition, values of the number of theoretical plates, the peak full width at half maximum, the symmetry factor, the S/N ratio, and the peak area obtained by the above-described methods are presented in Table 3.

### Example 16

### Preparation of Mobile Phase R1

In 500 mL of water, 0.00450 g of oxalic acid and 0.6306 g of ammonium formate were dissolved. The pH (25°C) of the resulting aqueous solution was 5.31. Subsequently, the aqueous solution was irradiated with ultrasonic waves using a tabletop ultrasonic cleaner to degas the aqueous solution, and a mobile phase R1 was obtained. It was visually confirmed that the oxalic acid and the ammonium formate were completely dissolved in the obtained mobile phase R1.

### Preparation of Mobile Phase R2

The mobile phase R1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase R2 was obtained. It was visually confirmed that the oxalic acid and the ammonium formate were completely dissolved in the obtained mobile phase R2.

### Separation and Detection

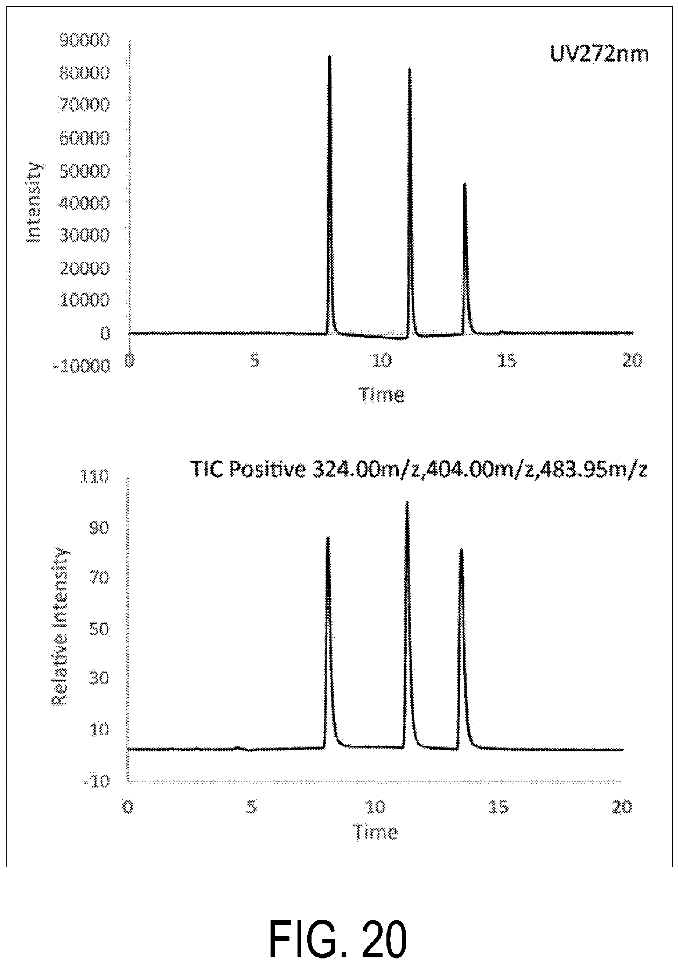

The sample was subjected to separation and detection in the same manner as in Example 11 with the exception that the mobile phase R1 was used in place of the mobile phase M1, and the mobile phase R2 was used in place of the mobile phase M2. Representative chromatograms are shown in FIG. 20. In addition, values of the number of theoretical plates, the peak full width at half maximum, the symmetry factor, the S/N ratio, and the peak area obtained by the above-described methods are presented in Table 3.

### Example 17

### Preparation of Mobile Phase S1

In 500 mL of water, 0.0225 g of oxalic acid and 0.1576 g of ammonium formate were dissolved. The pH (25°C) of the resulting aqueous solution was 4.44. Subsequently, the aqueous solution was irradiated with ultrasonic waves using a tabletop ultrasonic cleaner to degas the aqueous solution, and a mobile phase S1 was obtained. It was visually confirmed that the oxalic acid and the ammonium formate were completely dissolved in the obtained mobile phase S1.

### Preparation of Mobile Phase S2

The mobile phase S1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase S2 was obtained. It was visually confirmed that the oxalic acid and the ammonium formate were completely dissolved in the obtained mobile phase S2.

### Separation and Detection

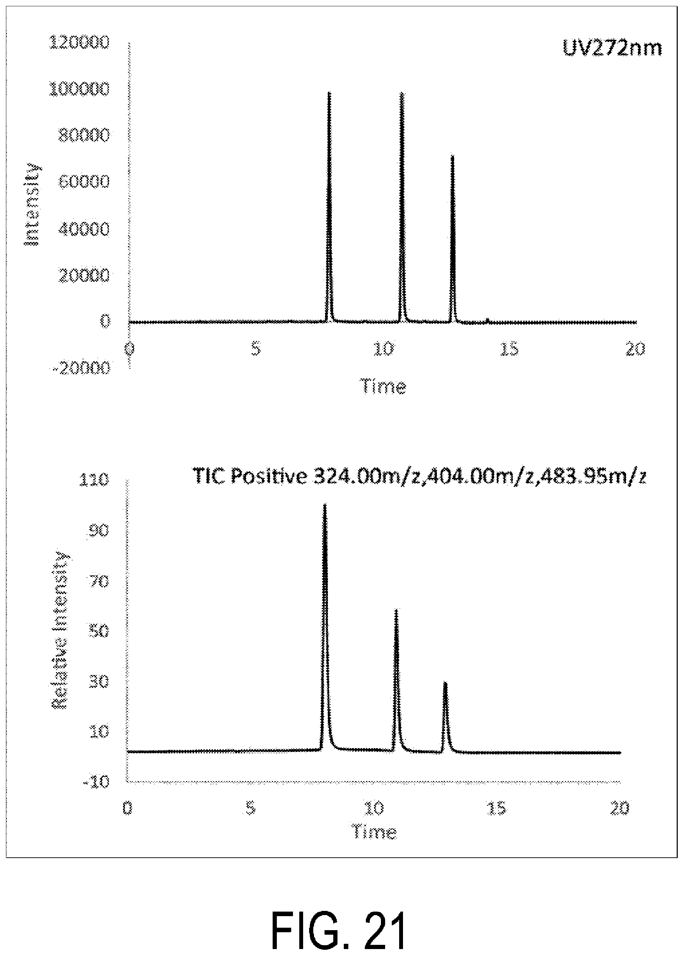

The sample was subjected to separation and detection in the same manner as in Example 11 with the exception that the mobile phase S1 was used in place of the mobile phase M1, and the mobile phase S2 was used in place of the mobile phase M2. Representative chromatograms are shown in FIG. 21. In addition, values of the number of theoretical plates, the peak full width at half maximum, the symmetry factor, the S/N ratio, and the peak area obtained by the above-described methods are presented in Table 3.

### Example 18

### Preparation of Mobile Phase T1

In 500 mL of water, 0.0450 g of oxalic acid and 0.1576 g of ammonium formate were dissolved. The pH (25°C) of the resulting aqueous solution was 4.09. Subsequently, the aqueous solution was irradiated with ultrasonic waves using a tabletop ultrasonic cleaner to degas the aqueous solution, and a mobile phase T1 was obtained. It was visually confirmed that the oxalic acid and the ammonium formate were completely dissolved in the obtained mobile phase T1.

### Preparation of Mobile Phase T2

The mobile phase T1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase T2 was obtained. It was visually confirmed that the oxalic acid and the ammonium formate were completely dissolved in the obtained mobile phase T2.

### Separation and Detection

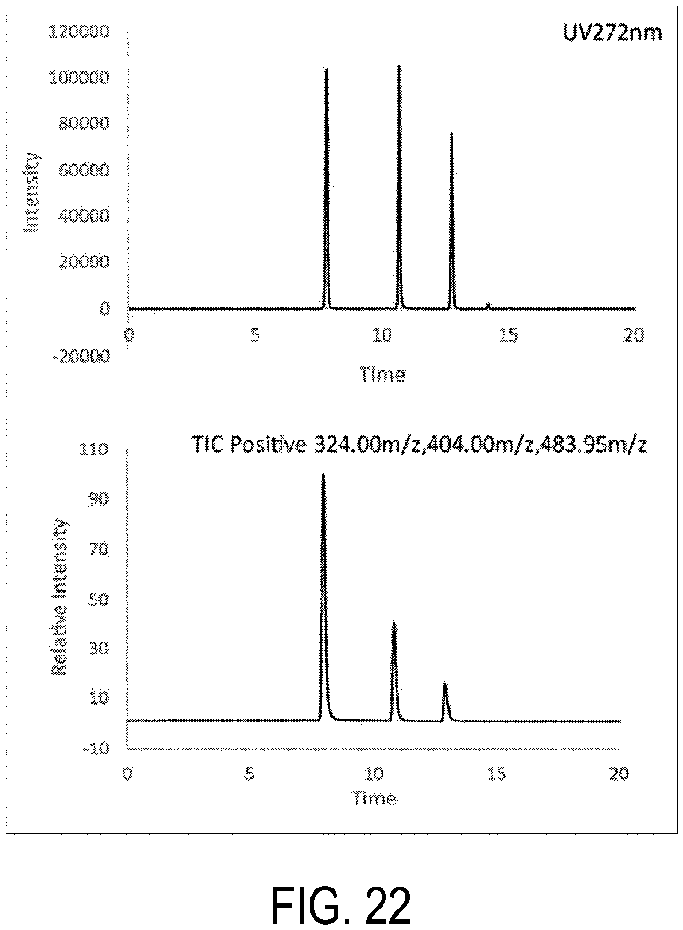

The sample was subjected to separation and detection in the same manner as in Example 11 with the exception that the mobile phase T1 was used in place of the mobile phase M1, and the mobile phase T2 was used in place of the mobile phase M2. Representative chromatograms are shown in FIG. 22. In addition, values of the number of theoretical plates, the peak full width at half maximum, the symmetry factor, the S/N ratio, and the peak area obtained by the above-described methods are presented in Table 3.

### Example 19

### Preparation of Mobile Phase U1

In 500 mL of water, 0.0045 g of oxalic acid and 0.1576 g of ammonium formate were dissolved. The pH (25°C) of the resulting aqueous solution was 5.22. Subsequently, the aqueous solution was irradiated with ultrasonic waves using a tabletop ultrasonic cleaner to degas the aqueous solution, and a mobile phase U1 was obtained. It was visually confirmed that the oxalic acid and the ammonium formate were completely dissolved in the obtained mobile phase U1.

### Preparation of Mobile Phase U2

The mobile phase U1 and acetonitrile were mixed at a ratio of 70:30, and a mixed liquid was obtained. Subsequently, the mixed liquid was irradiated with ultrasonic waves using a tabletop ultrasonic cleaner to degas the mixed liquid, and a mobile phase U2 was obtained. It was visually confirmed that the oxalic acid and the ammonium formate were completely dissolved in the obtained mobile phase U2.

### Separation and Detection

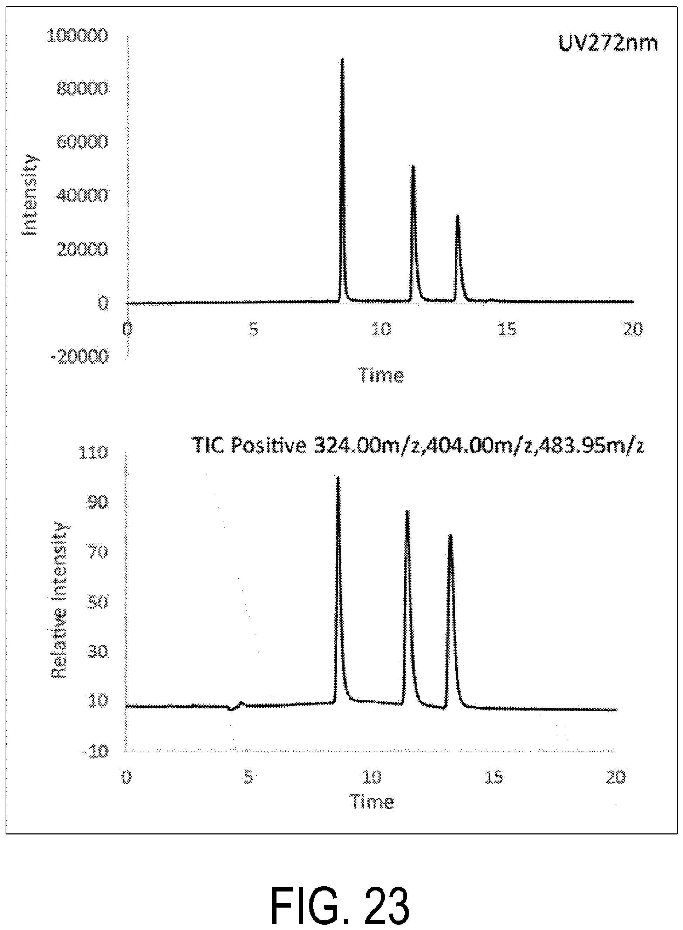

The sample was subjected to separation and detection in the same manner as in Example 11 with the exception that the mobile phase U1 was used in place of the mobile phase M1, and the mobile phase U2 was used in place of the mobile phase M2. Representative chromatograms are presented in FIG. 23. In addition, values of the number of theoretical plates, the peak full width at half maximum, the symmetry factor, the S/N ratio, and the peak area obtained by the above-described methods are presented in Table 3.

### [Table 3]

**Table 3**

| | Detection | Mobile Phases D1 to L1 | | Mobile Phase D2 to L2 | | Number of Theoretical Plates | Peak Full Width at Half Maximum (min) | Symmetry Factor | S/N Ratio | Peak area |
|---|---|---|---|---|---|---|---|---|---|---|
| | | Oxalic Acid Concentration (mM) | Ammonium Formate Concentration (mM) | Oxalic Acid Concentration (mM) | Ammonium Formate Concentration (mM) | | | | | |
| Example 11 | UV detection | 0.50 | 10.0 | 0.35 | 7.0 | 150388 | 0.080 | 1.392 | 432.87 | 390734 |
| | MS detection | | | | | 40012 | 0.158 | 1.796 | 2652.16 | 2255752 |
| Example 12 | UV detection | 1.00 | 10.0 | 0.70 | 7.0 | 138618 | 0.083 | 1.334 | 530.44 | 406383 |
| | MS detection | | | | | 22951 | 0.207 | 2.409 | 2351.62 | 2190767 |
| Example 13 | UV detection | 0.10 | 10.0 | 0.07 | 7.0 | 42022 | 0.153 | 2.361 | 299.99 | 361640 |
| | MS detection | | | | | 18334 | 0.235 | 1.872 | 2089.58 | 2011529 |
| Example 14 | UV detection | 0.50 | 20.0 | 0.35 | 14.0 | 127901 | 0.089 | 1.658 | 519.79 | 406902 |
| | MS detection | | | | | 20779 | 0.223 | 2.954 | 3069.12 | 3472292 |
| Example 15 | UV detection | 1.00 | 20.0 | 0.70 | 14.0 | 137195 | 0.086 | 1.587 | 526.13 | 422493 |
| | MS detection | | | | | 16764 | 0.249 | 7.957 | 2111.57 | 3538229 |
| Example 16 | UV detection | 0.10 | 20.0 | 0.07 | 14.0 | 85599 | 0.107 | 2.452 | 410.69 | 364873 |
| | MS detection | | | | | 25458 | 0.199 | 1.956 | 2897.11 | 3179500 |
| Example 17 | UV detection | 0.50 | 5.0 | 0.35 | 3.5 | 142028 | 0.080 | 1.274 | 459.51 | 381244 |
| | MS detection | | | | | 40899 | 0.150 | 1.613 | 1765.19 | 1419936 |
| Example 18 | UV detection | 1.00 | 5.0 | 0.70 | 3.5 | 145952 | 0.079 | 1.184 | 538.29 | 392995 |
| | MS detection | | | | | 40403 | 0.151 | 1.668 | 1580.88 | 1308044 |
| Example 19 | UV detection | 0.10 | 5.0 | 0.10 | 3.5 | 35176 | 0.164 | 2.031 | 291.77 | 355978 |
| | MS detection | | | | | 16571 | 0.242 | 1.796 | 867.25 | 1411313 |

### REFERENCE SIGNS LIST

10: Analytical kit
11: Mobile phase composition
13: Vial

## Claims

1. An analysis method for analyzing a sample, the analysis method comprising:
a separation step of separating an analyte contained in the sample by chromatography; and
a detection step of detecting the analyte separated in the separation step; wherein
a mobile phase used in the chromatography contains one or more oxalic acid compounds selected from the group consisting of oxalic acid, an oxalate represented by General Formula (1), and an oxalate represented by General Formula (2), and one or more monovalent carboxylic acid compounds selected from the group consisting of formic acid, acetic acid, propionic acid, a formate represented by General Formula (3), an acetate represented by General Formula (4), and a propionate represented by General Formula (5), and
when the oxalic acid compound contains only oxalic acid, the monovalent carboxylic acid compound contains one or more selected from the group consisting of the formate, the acetate, and the propionate, and when the monovalent carboxylic acid compound contains only one or more selected from the group consisting of formic acid, acetic acid, and propionic acid, the oxalic acid compound contains the oxalate:
(COONR₄)₂ (1)
HOOCCOONR₄ (2)
HCOONR₄ (3)
CH₃COONR₄ (4)
CH₃CH₂COONR₄ (5)
where, each R independently represents a hydrogen atom or an alkyl group having from 1 to 20 carbons.

2. The analysis method according to claim 1, wherein the sample includes a compound having a phosphate group, a mixture of enantiomers, or a polyvalent carboxylic acid compound.

3. The analysis method according to claim 2, wherein the compound having a phosphate group is one or more selected from the group consisting of a nucleic acid, a nucleic acid derivative, a nucleotide, and a nucleotide derivative.

4. The analysis method according to claim 1, wherein the chromatography is liquid chromatography or supercritical fluid chromatography.

5. The analysis method according to claim 1, wherein the detection of the analyte in the detection step is performed by absorbance detection, mass spectrometry, or a combination thereof.

6. The analysis method according to claim 5, wherein an ionization method in the mass spectrometry is electrospray ionization or atmospheric pressure chemical ionization.

7. The analysis method according to claim 1, wherein the mobile phase satisfies one or both of (a) and (b):
(a) a concentration of the oxalic acid compound is from 0.01 mM to 1.0 mM; and
(b) a concentration of the monovalent carboxylic acid compound is from 3.5 mM to 20.0 mM.

8. A mobile phase composition for use in a mobile phase for chromatography, the mobile phase composition comprising:
one or more oxalic acid compounds selected from the group consisting of oxalic acid, an oxalate represented by General Formula (1), and an oxalate represented by General Formula (2); and
one or more monovalent carboxylic acid compounds selected from the group consisting of formic acid, acetic acid, propionic acid, a formate represented by General Formula (3), an acetate represented by General Formula (4), and a propionate represented by General Formula (5), wherein
when the oxalic acid compound contains only oxalic acid, the monovalent carboxylic acid compound contains one or more selected from the group consisting of the formate, the acetate, and the propionate, and when the monovalent carboxylic acid compound contains only one or more selected from the group consisting of formic acid, acetic acid, and propionic acid, the oxalic acid compound contains the oxalate:
(COONR₄)₂ (1)
HOOCCOONR₄ (2)
HCOONR₄ (3)
CH₃COONR₄ (4)
CH₃CH₂COONR₄ (5)
where, each R independently represents a hydrogen atom or an alkyl group having from 1 to 20 carbons.

9. An analytical kit comprising the mobile phase composition according to claim 8.
